# EUROPEAN PATENT APPLICATION

(11) **EP 1 592 252 A1**
(43) Date of publication of application: **02.11.2005**
(21) Application number: 04708439.7
(22) Date of filing: 05.02.2004
(51) Int. Cl.: H04N 7/16

(54) **VIDEO DATA DISTRIBUTION CONTROL METHOD, DEVICE, SYSTEM, AND PROGRAM**

(30) Priority: 07.02.2003 JP 2003031174; 21.11.2003 JP 2003391933
(71) Applicant: NEC CORPORATION, Minato-ku, Tokyo 108-8001 (JP)
(72) Inventor: DEI, Hiroaki, c/o NEC Corporation, Minato-ku, Tokyo 108-8001 (JP)
(74) Representative: Baronetzky, Klaus
(86) International application number: PCT/JP2004/001176
(87) International publication number: WO 2004/071089

(57) **Abstract**

A video data distribution device 101 multicast or broadcast distribute moving picture data of the same video, the same encoding method, the same frame configuration but having different compression ratios in at least one different session according to the compression ratio or the video frame and the video block type and controls to notify session information or confidential information on the distribution data to a receiver according to the video quality permitted for the receiver to receive. A video data reception device 108 uses the notified session information or the confidential information so as to select encoded data from the normally received encoded data from at least one session, according to the video quality, and decode it.

## Description

### FIELD OF THE INVENTION

The present invention relates to a method, system, and program distributing encoded moving picture data in at least one session of distribution and controlling the quality of the video received by a receiver by notifying the session information to the receiver.

### BACKGROUND OF THE INVENTION

In recent years, as a method for efficiently transmitting moving picture data, the methods transmitting data encoded by high efficiency compression based on interframe prediction are widely used. In these methods, the amount of moving picture data information with high correlations over time is reduced by encoding prediction parameters obtained by predicting an encoded picture from prior and posterior frames in point of time, and predicted residual differential picture data. Furthermore, moving picture data transmission through a narrow transmission band is made possible by high efficiently compression-encoding the predicted residual differential picture data by conversion encoding and quantization.

This method is represented by compression coding systems such as MPEG (Moving Picture Experts Group)-1, MPEG-2, and MPEG-4. In these compression coding systems, interframe prediction for an input image frame is performed with motion compensation per rectangular area unit with a certain size called macroblock, the motion vectors obtained and predicted residual differential picture data are compressed by two-dimensional discrete cosine transformation and quantization, and the resultant signal data is variable length encoded.

As a technology for distributing such moving picture compression encoding information over an IP (Internet Protocol) network utilizing the packet switching system, multicast or broadcast distribution has become common. In this system, since multiple users receive packets multicast or broadcast, the network traffic does not increase proportionally to the increase in the number of users, therefore distribution more efficient than the unicast system can be achieved.

Further, a picture distribution system structured such that it has a first computer capable of streaming-distributing picture data and at least one second computer receiving the picture data, and based on a connection status notification message from the second computer, the first computer sends the picture data (picture data extracted from picture data with different compression ratios stored in advance or picture data compressed with an optimum ratio each time) compressed most suitably for the communication speed of a line to which the second computer is connected is known. (Refer to Patent Document 1 for instance.)

Also, a service quality dynamic control method and device providing different product qualities such as grade 1 and grade 2 between which the customer can choose in a service such as a moving picture multicast, and further allowing the customer to select product quality for each content is known. (Refer to Patent Document 2 for instance.)

### [Patent Document 1]

Japanese Patent Kokai Publication No. JP-P2001-92752A (pp. 3-4, FIGS. 1 and 6)

### [Patent Document 2]

Japanese Patent Kokai Publication No. JP-P2002-261800A (p. 12, FIG. 13)

### [Non-Patent Document 1]

Schulzrinne, H., Casner, S., Frederick, R., and Jacobson, V., "RTP: A Transport Protocol for Real-Time Applications, RFC1889, January 1996, 5.1 RTP Fixed Header Fields. Obtainable from <URL: http://www.ietf.org/tfc.html>
<ftp://ftp.rfc-editor.org/in-notes/rfc1889.txt>

### SUMMARY OF THE DISCLOSURE

However, in the conventional multicast or broadcast distribution system, in order for a sender to control the image quality of moving picture data received by a receiver, moving picture data with various qualities (image quality) have to be distributed, spoiling the distribution efficiency, one of the merits of the multicast or broadcast system.

Further, the multicast or broadcast distribution system does not generally allow the receiver to request retransmission of the missing data when a packet is missing, therefore the receiver (the receiving device) cannot decode the video data accurately. As a countermeasure on the part of the receiver (the receiving device), there is an error concealment technique that generates video data from accurately decoded images of prior and posterior frames in point of time and surrounding image data within the same frame to conceal errors, however, it is impossible to remove the disturbance in the decoded video. Furthermore, once a disturbance occurs in the video, it propagates over the subsequent frames since interframe prediction is used.

Therefore, the present invention was invented considering the circumstances described above, and its first object is to provide a system, device, method, and computer program wherein the quality of moving picture received by a receiver can be variably set by a sender while suppressing and reducing the increase in traffic in multicast or broadcast distribution of moving picture.

Further, a second object of the present invention is to provide a distribution system, device, method, and computer program wherein the disturbance in image caused by packet loss is suppressed by having the receiver receive video data in at least one session of distribution, and select and decode the data according to the video quality in order to increase the reliability of the multicast or broadcast distribution system.

Further, another object of the present invention is to provide a distribution system, device, method, and computer program wherein the processing burden for the sender and receiver caused by achieving the first and second objects described above is kept to a minimum.

A further object of the present invention is to provide a distribution system, device, method, and computer program wherein the first and second objects described above are achieved without sending feedback information from the receiver to the sender.

A still further object of the present invention is to provide a method, device, system, and computer program wherein the increase in power consumption on the part of the receiver caused by achieving the first and second objects described above is kept to a minimum.

A video data distribution device relating to an aspect of the present invention that solves at least one of the above mentioned problems comprises: means for multicast or broadcast distributing video encoded data of the same video but having different compression ratios; and means for selecting a session of multicast or broadcast distribution according to the compression ratio. In the present invention, the video encoded data of the same video but having different compression ratios have the same encoding method and the same frame configuration. Its transmission unit (for instance video packet of MPEG-4 encoding method) is data obtained by encoding the same part of the same frame. The present invention comprises means for distributing video encoded data of the same video but having different compression ratios; and means for selecting a session of distribution according to the compression ratio, and at least one session of distribution is transmitted in multicast or broadcast.

A video data distribution device relating to another aspect of the present invention comprises means for multicast or broadcast distributing video encoded data of the same video but having different compression ratios; and means for controlling the quality of a video received by a receiver by changing session information notified according to the receiver. In the present invention, the video encoded data of the same video but having different compression ratios have the same encoding method and the same frame configuration, and its transmission unit (for instance video packet of MPEG-4 encoding method) is data obtained by encoding the same part of the same frame.

A video data distribution device relating to another aspect of the present invention comprises: means for multicast or broadcast distributing video encoded data having different compression ratios; and means for setting information including whether or not the confidentiality (secrecy) of video encoded data is required, confidentiality method when confidentiality is required, and/or the degree of confidentiality for each session of distribution selected according to the compression ratio. In the present invention, the video encoded data of the same video but having different compression ratios have the same encoding method and the same frame configuration. Its transmission unit (for instance video packet of MPEG-4 encoding method) is data obtained by encoding the same part of the same frame.

A video data distribution device relating to another aspect of the present invention comprises: means for multicast or broadcast distributing video encoded data; and means for selecting a session of multicast or broadcast distributed according to the kind (type) of video frame and/or video block.

A video data distribution device relating to another aspect of the present invention comprises: means for multicast or broadcast distributing video encoded data having different kind (type) of video frame and video block; and means for controlling on the part of the receiver, the quality of a video received by a receiver by changing session information notified according to the receiver.

A video data distribution device relating to another aspect of the present invention comprises: means for multicast or broadcast distributing video encoded data; and means for setting information including whether or not confidentiality is required for distributed data, confidentiality method when confidentiality is required, and/or the degree of confidentiality for each session of distribution selected according to the kind (type) of video frame and/or video block.

A video data distribution device relating to another aspect of the present invention comprises: means for multicast or broadcast distributing video encoded data having different information in terms of whether or not confidentiality is required for distributed data, confidentiality method when confidentiality is required, and/or the degree of confidentiality in at least one session of distribution; and means for controlling, on the part of the receiver, the quality of a video received by a receiver by changing information regarding confidentiality notified according to the receiver.

A video data reception device relating to another aspect of the present invention comprises means: for receiving session information notified by a video data distribution device; means for receiving video encoded data distributed by a video data distribution device based on' the session information and selecting video encoded data from encoded data received normally based on the video quality (the compression ratio); and means for decoding video encoded data selected. In the present invention, it can further comprise means for selecting whether or not at least one piece of video data should be received based on at least one of the following: the error/loss rate of received data, available power, and predetermined settings.

A video data reception device relating to another aspect of the present invention comprises: means for receiving information regarding data confidentiality notified by a video data distribution device; means for restoring confidential video encoded data received from a video data distribution device based on the information regarding confidentiality and selecting video encoded data from the video encoded data restored normally based on the video quality (the compression ratio); and means for decoding the selected video encoded data. In the present invention, it may further comprise means for selecting whether or not at least one piece (string) of video data should be received based on at least one of the following: the error/loss rate of received data, available power, and predetermined settings.

A video data distribution system relating to a first aspect of the present invention that achieves at least one of the above mentioned objects comprises: a video data distribution device and a video data reception device, and a transmission path transmitting information from the video data distribution device to the video data reception device;
the video data distribution device comprises:
means for multicast or broadcast distributing a plurality of (multiple) video encoded data of the same video, the same encoding method, and the same frame configuration but having different compression ratios in different sessions; and means for notifying the session information on at least one session (multicast address, port number, video quality, etc.), including session information on a session permitted to be distributed to, and/or a quality that a receiver is permitted to receive, to the receiver; and
the video data reception device comprises:
means for receiving video encoded data distributed in at least one session based on session information notified by the video data distribution device;
means for selecting data from received video encoded data based on the video quality (the compression ratio) and reconstructing it into one piece of video encoded data; and
means for decoding the video encoded data reconstructed. In the present invention, it can further comprise means for selecting whether or not at least one piece of video data should be received based on at least one of the following: the error/loss rate of received data, available power, and predetermined settings.

A video data distribution system relating to another aspect (a second aspect) of the present invention comprises a video data distribution device, a video data reception device, and a transmission path for transmitting information from the video data distribution device to the video data reception device. The video data distribution device comprises: means for multicast or broadcast distributing I picture and P picture encoded data of moving picture data or I picture, P picture and B picture encoded data of moving picture data in a plurality of (multiple) different sessions; and
means for notifying session information on at least one session including session information on a session permitted to be distributed to and/or a video quality permitted to be received by the video data reception device.

The video data reception device comprises:
means for receiving moving picture data distributed in at least one session based on the session information notified by the video data distribution device; means for reconstructing the received moving picture data into one piece of moving picture data based on the session information; and means for decoding the reconstructed moving picture data. In the present invention, it can further comprise means for selecting whether or not at least one piece of video data should be received based on at least one of the following: the error/loss rate of received data, available power, and predetermined settings.

A video data distribution system relating to another aspect (a third aspect) of the present invention comprises: a video data distribution device, a video data reception device, and a transmission path for transmitting information from the video data distribution device to the video data reception device. The video data distribution device comprises:
means for multicast or broadcast distributing moving picture data and intra macroblock (Intra-MB) encoded data of at least a part of frames of the moving picture data in different sessions: and
means for notifying information on at least one session including information on a session permitted to be distributed to and/or a video quality permitted to be received by the video data reception device.

The video data reception device comprises:
means for receiving data distributed in at least one session based on the session information notified by the video data distribution device;
means for selecting data from the received moving picture data based on the video quality and reconstructing it into one piece of moving picture data; and
means for decoding the reconstructed moving picture data. In the present invention, it may further comprise means for selecting whether or not at least one piece (string) of video data should be received based on at least one of the following: the error/loss rate of received data, available power, and predetermined settings.

A video data distribution system relating to another aspect (a fourth aspect) of the present invention comprises: a video data distribution device, a video data reception device, and a transmission path for transmitting information from the video data distribution device to the video data reception device.

The video data distribution device comprises:
means for multicast or broadcast distributing I picture and P picture encoded data or I picture, P picture and B picture encoded data of moving picture data and intra macroblock (Intra-MB) encoded data of at least a part of frames of the moving picture in a plurality of (multiple) different sessions; and
means for notifying session information on at least one session including information on a session permitted to be distributed to and/or a video quality permitted to be received by the video data reception device.

The video data reception device comprises:
means for receiving data distributed in at least one session out of the session information notified;
means for selecting data from the received moving picture data based on the video quality and reconstructing it into one piece of moving picture data; and
means for decoding the reconstructed moving picture data.

In the present invention, it can further comprise means for selecting whether or not at least one piece of video data should be received based on at least one of the following: the error/loss rate of received data, available power, and predetermined settings.

A video data distribution system relating to another aspect (a fifth aspect) of the present invention comprises a video data distribution device, a video data reception device, and a transmission path for transmitting information from the video data distribution device to the video data reception device.

The video data distribution device comprises:
means for multicast or broadcast distributing I picture and P picture encoded data, or I picture, P picture and B picture encoded data of multiple moving picture data of the same video but having different compression ratios in multiple different sessions:
   means for notifying information on at least one session including information on a session permitted to be distributed to, and/or a video quality permitted to be received by, the video data reception device.

The video data reception device comprises:
means for receiving data distributed in at least one session out of the session information notified by the video data distribution device;
means for selecting data from the received moving picture data based on the video quality and reconstructing it into one piece of moving picture data; and
means for decoding the reconstructed moving picture data. In the present invention, it can further comprise means for selecting whether or not at least one piece of video data should be received based on at least one of the following: the error/loss rate of received data, available power, and predetermined settings.

A video data distribution system relating to another aspect (a sixth aspect) of the present invention comprises: a video data distribution device, a video data reception device, and a transmission path for transmitting information from the video data distribution device to the video data reception device. The video data distribution device comprises:
means for multicast or broadcast distributing I picture and P picture encoded data or I picture, P picture and B picture encoded data of multiple moving picture data of the same video, the same encoding method, and the same frame configuration but having different compression ratios and intra macroblock (Intra-MB) encoded data of at least a part of frames of the moving picture in multiple different sessions; and
means for notifying information on at least one session including information on a session permitted to be distributed to, and/or a video quality permitted to be received by, the video data reception device.

The video data reception device comprises:
means for receiving data distributed in at least one session out of the session information notified by the video data distribution device;
means for selecting data from the received moving picture data based on the video quality and reconstructing it into one piece of moving picture data; and
means for decoding the reconstructed moving picture data. In the present invention, it can further comprise means for selecting whether or not at least one piece of video data should be received based on at least one of the following: the error/loss rate of received data, available power, and predetermined settings.

In a video data distribution system relating to another aspect (a seventh aspect) of the present invention, the video data distribution device comprises: means for setting information including whether or not confidentiality is required for distributed data, confidentiality method when confidentiality is required, and/or the degree of confidentiality for each session of distribution and means for notifying the setting information regarding confidentiality to a receiver. The video data reception device comprises: means for receiving the confidentiality information notified by the video data distribution device and restoring the confidential moving picture data received based on the confidentiality information. In the present invention, it may further comprise means for selecting whether or not at least one piece of video data should be received based on at least one of the following: the error/loss rate of received data, available power, and predetermined settings.

According to the present invention, a sender is able to effectively control the quality of a video that a receiver is permitted to receive without changing video data multicast or broadcast distributed by setting session information notified to the receiver or confidentiality information, on the part of the receiver.

Further, according to the present invention, a sender is able to effectively set the quality of a video that a receiver receives in multiple stages of grades, keeping the advantages of multicast or broadcast distribution that effectively utilizes network resources and suppressing the increase in the amount of distributed data.

Further, according to the present invention, a distribution unaffected by (or resistance to) a data error or loss in a transmission path becomes possible, and the reliability of the multicast or broadcast system, which is said to be less reliable than the unicast system, is increased.

Further, according to the present invention, an increase in processing load required for both the sender and receiver to achieve the two effects mentioned above can be kept to a minimum.

Further, according to the present invention, an increase in power consumption required for both the sender and receiver to achieve the two effects mentioned above can be kept to a minimum.

According to the present invention, these effects can be achieved without sending feedback information from the receiver to the sender.

### BRIEF DESCRIPTION OF THE DRAWINGS

FIG. 1 is a drawing showing the structure of a first embodiment of the present invention.
FIG. 2 is a drawing showing the structure of a second embodiment of the present invention.
FIG. 3 is a drawing showing the structure of a third embodiment of the present invention.
FIG. 4 is a drawing showing the structure of a fourth embodiment of the present invention.
FIG. 5 is a drawing showing the structure of a fifth embodiment of the present invention.
FIG. 6 is a drawing showing the structure of a sixth embodiment of the present invention.
FIG. 7 is a drawing showing a variation of the first embodiment of the present invention.
FIG. 8 is a drawing showing the structure of an embodiment of a packet receiver-separator unit in the present invention.
FIG. 9 is a drawing showing a variation of the second embodiment of the present invention.
FIG. 10 is a drawing showing a variation of the third embodiment of the present invention.
FIG. 11 is a drawing showing a variation of the fourth embodiment of the present invention.
FIG. 12 is a drawing showing a variation of the fifth embodiment of the present invention.
FIG. 13 is a drawing showing a variation of the sixth embodiment of the present invention.

### PREFERRED EMBODIMENTS OF THE INVENTION

Embodiments of the present invention will be described hereinafter with reference to the attached drawings in order to further explain the present invention in detail.

### [THE FIRST EMBODIMENT OF THE INVENTION]

In a first embodiment of the present invention, a video data distribution device comprises means for multicast or broadcast distributing multiple moving picture data of the same video, the same encoding method, the same frame configuration but having different compression ratios in different sessions and means for notifying the session information on at least one session (multicast address, port number, video quality, etc.), including a quality that a receiver is permitted to receive, to the receiver. The first embodiment of the present invention can further comprise means for selecting whether or not at least one piece of video data should be received based on at least one of the following: the error/loss rate of received data, available power, and predetermined settings.

A video data reception device comprises means for receiving data distributed in at least one session out of the session information notified by the video data distribution device, and means for selecting data from the moving picture data received based on the video quality, and reconstructing same into a piece of moving picture data, followed by decoding.

Further, the video data distribution device comprises means for setting whether or not the confidentiality of the distributed data is required, means for securing confidentiality, and the degree of confidentiality for each session of distribution, and means for notifying the setting information regarding confidentiality to the receiver (the video data reception device).

The video data reception device comprises means for receiving the confidential information notified by the video data distribution device, restoring the data received, and decoding the moving picture data.

### [Example 1]

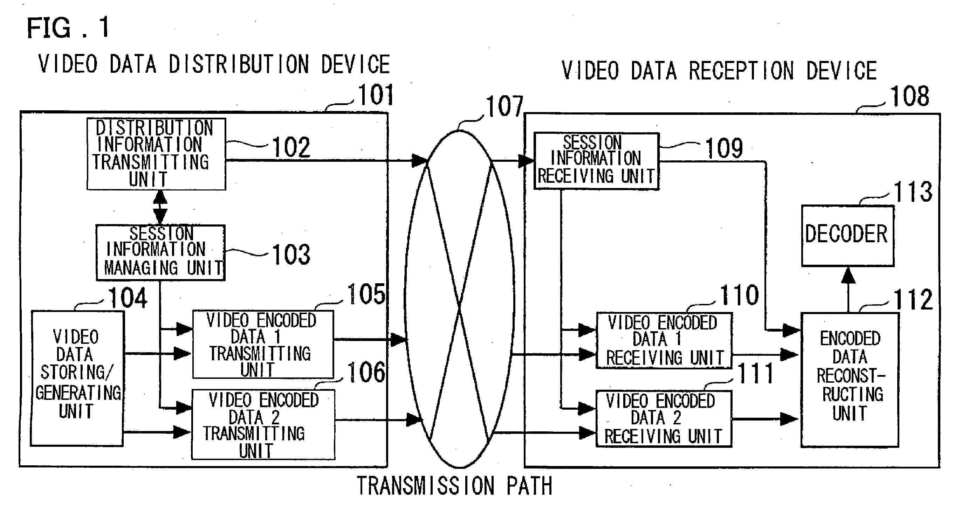

Next, the first example of the present invention will be described with reference to the drawings. FIG. 1 shows the structure of the first embodiment of the present invention. As shown in FIG. 1, it comprises a video data distribution device 101 for distributing video encoded data, a video data reception device 108, a transmission path 107 for transmitting the video encoded data. In the present embodiment, the video data distribution device 101 is connected to the transmission path 107, an IP (Internet Protocol) network, and distributes the video encoded data using UDP (User Datagram Protocol)/IP, and the video data reception device 108 is a client terminal connected to the IP network. In this example, for the sake of simplicity, the explanations will be made assuming the number of video data distributed is "2, however, it should be noted that the number of video data distributed is not limited to 2 in the present invention.

The video data distribution device 101 comprises a distribution information transmitting unit 102, a session information managing unit 103, a video data storing/generating unit 104, a video encoded data 1 transmitting unit 105, and a video encoded data 2 transmitting unit 106.

The video data reception device 108 comprises a session information receiving unit 109, a video encoded data 1 receiving unit 110 and a video encoded data 2 receiving unit 111, an encoded data reconstructing unit 112, and a decoder 113. Hereinafter, the operations of the video data distribution device 101 and the video data reception device 108 will be described in order.

In the video data distribution device 101, the video data storing/generating unit 104 transmits:
- video data stored in a memory device (not shown in the drawing) in advance, or
- video data encoded and generated in real-time, or
- video data generated by converting existing video data in real-time
based on the information set by the session information managing unit 103 from a plurality of (multiple) video encoded data transmitting units, the video encoded data 1 transmitting unit 105 and the video encoded data 2 transmitting unit 106 in the example shown in FIG. 1, via the transmission path 107.

The session information managing unit 103 manages the information on a session allowed to be distributed to the receiver (the video data reception device), and according to the receiver, supplies the session information that should be notified and the information regarding video encoding such as video quality to the distribution information transmitting unit 102, and the distribution information transmitting unit 102 notifies these pieces of information to the video data reception device 108.

The video encoded data 1 transmitting unit 105 and the video encoded data 2 transmitting unit 105 have the function of adding information (for instance RTP header information) that corresponds to RTP (Real-Time Transport Protocol) so that, in the video data reception device 108, data can be selected when redundant multiple video data are received, the order of the data can be correctly rearranged when the order of the data received is wrong, and so that data loss can be recognized (for instance, RFC1889, refer to the above mentioned Non-Patent Document 1). Further, the transmission units of the video encoded data 1 and the video encoded data 2 are data obtained by encoding the same part of the same frame of the same video, the same RTP sequence number is assigned, and further a payload type and/or SSRC (Synchronization Source Identifier), and/or CSRC (Contributing Source Identifier) identifying any one of the video encoded data can be assigned as well.

At this time, by transmitting the video encoded data 1 and the video encoded data 2 with a time lag longer than the burst length of data error or loss in the transmission path 107, the possibility of any error or loss influencing both the video encoded data in the transmission path is reduced, and a more stable distribution of video data can be achieved when the video data reception device 108 has a receive buffer longer than this time lag.

As for the time lag between transmissions, the distribution information transmitting unit 102 can notify the time lag, managed by the session information managing unit 103, to the video data reception device 108, or the amount of the receive buffer can be set by the video data reception device 108 based on the time lag that is set in advance between the video data distribution device 101 and the video data reception device 108.

When the session information managing unit 103 is set to make the distributed video data confidential, the video encoded data 1 transmitting unit 105 and the video encoded data 2 transmitting unit 106 apply encryption processing according to the setting. And the information regarding encryption such as whether or not any encryption is applied and encryption method is notified by the distribution information transmitting unit 102 to the video data reception device 108. As for the encryption method, various known methods are used. For instance, for an encryption of payload portion of an RTP packet, the common key system (e.g. DES (Data Encryption Standard)), or the public key system (e.g. RAS code), and scrambling of the video (image) itself (e.g. line rotation system) are used.

When the session information, the information regarding video encoding, and the distribution data from the video data distribution device 101 are encrypted, the information regarding the encryption is received by the session information receiving unit 109, and based on this information, the video encoded data 1 receiving unit 110 and the video encoded data 2 receiving unit 111 open session receiving ports and receive the video data from the transmission path 107.

When the video data received is encrypted, the original video (image) data is restored according to the information obtained from the session information receiving unit 109.

Further, the session information managing unit 103 sets the information corresponding to the encoding settings of the video encoded data 1 and the video encoded data 2, encoding options (tools used), the payload options of the encoded data, the RTP header payload type that discriminates the encoded data, and/or an SSRC and CSRC, and the settings are notified to the video data reception device 108 by the distribution information transmitting unit 102, or these pieces of information can be set in advance between the video data distribution device 101 and the video data reception device 108.

When the video encoded data 1 receiving unit 110 and the video encoded data 2 receiving unit 111 are able to receive both the video encoded data 1 and 2, the encoded data reconstructing (reformulating) unit 112 selects data according to the video quality, reconstructs duplicate video data into one piece of video data based on the function corresponding to RTP, the sequence number of the RTP header, the payload type, the information from an SSRC and CSRC, and/or the information received by the session information receiving unit 109, and outputs the result to the decoder 113.

The decoder 113 only has to decode one piece of the video data selected by the encoded data reconstructing unit 112. Therefore, the decode processing load of the decoder 113 does not increase.

In case where the sender (the video data distribution device) is to control the quality of the video data received by (a video data reception device of) a receiver A and (a video data reception device of) a receiver B respectively, the following technique can be employed:

The video encoded data 1 and the video encoded data 2 have different qualities (compression ratios) and for instance, the video encoded data 1 has a higher quality (lower compression ratio).

When the receiver A is permitted to receive the higher quality video and the receiver B is only permitted to receive the lower quality video, the session information on both the video encoded data 1 and video encoded data 2 is notified to the video data reception device 108 of the receiver A, whereas only the session information on the video encoded data 2 is notified to the video data reception device 108 of the receiver B.

The video data reception device 108 of the receiver A can receive both the high quality video data of the video encoded data 1 and low quality video data of the video encoded data 2 based on the session information on both the video encoded data 1 and video encoded data 2 notified, and even if any error or loss occurs in the video data of the video encoded data 1, it will be able to be supplemented with the video data of the video encoded data 2.

Meanwhile the video data reception device 108 of the receiver B can only receive the low quality video data of the video encoded data 2 according to the notified session information. Therefore, the video qualities of the received video are different between the receivers A and B.

Further, when distributing the same video encoded data 1 and video encoded data 2, if the video encoded data 1 is transmitted only to, for instance, the receiver A in the unicast system, and the video encoded data 2 is transmitted to both the receivers A and B in multicast or broadcast, the difference in the video quality will occur in this case as well.

Further, in case where the session information on both the video encoded data 1 and the video encoded data 2 is notified to the video data reception device 108 of the receiver A and the session information on only the video encoded data 1 is notified to the video data reception device 108 of the receiver B, the receivers A and B will receive the data of the same video quality if the video data of the video encoded data 1 is not influenced by any error or loss in the transmission path. On the other hand, when an error or loss occurs in the video data, the receiver A can supplement the problematic area with the video data of the video encoded data 2, which, however, the receiver B cannot do. Therefore, a difference in the stability of the video quality will occur between the receivers A and B as described above.

Further, if the video encoded data 1 and the video encoded data 2 have the same quality, or if the video encoded data 1 is transmitted from both the video encoded data 1 transmitting unit 105 and the video encoded data 2 transmitting unit 106, it will be possible to keep the degradation in video playback quality, influenced by an error or loss in the transmission path, to a minimum.

Additionally, in case where the video encoded data 2 is transmitted only to the receiver A in the unicast system, and the video encoded data 1 is transmitted to both the receivers A and B in multicast or broadcast, a similar difference in the stability of the video quality still occurs. In this case, since the bandwidth of the video encoded data transmitted in the unicast system is smaller, it is more preferable for suppressing the increase in traffic.

Further, the similar effects can be achieved by setting the quality (compression ratio) of the video encoded data 1 and the video encoded data 2 identically, encrypting only the video encoded data 1 for instance, and notifying how to decrypt and restore the encrypted video encoded data 1 to the video data reception device 108 of the receiver A, but not to the video data reception device 108 of the receiver B, or encrypting both the video encoded data 1 and the video encoded data 2, notifying how to decrypt and restore both the video encoded data to the video data reception device 108 of the receiver A, and notifying how to decrypt and restore only the video encoded data 2 to the video data reception device 108 of the receiver B.

In the present embodiment, when the video data reception device 108 is being used in an environment where the available power is limited such as in battery operation, and/or when it is used in a good reception environment where it can receive the video encoded data 1 with almost no error and loss, the reception of the video encoded data 2 can be stopped in order to maximize the operation time of the device. On the other hand, when the video data reception device 108 is connected to a battery with a large capacity or AC power, it can be set to receive both the video encoded data 1 and video encoded data 2. As described, according to the available power and reception environment, it can control which data to receive. Further, in the present embodiment, the receiver can be allowed to set the number of video data that the video data reception device 108 receives.

It should be noted that it is also possible, using a plurality of (multiple) transmission paths, to transmit the video encoded data 1, the video encoded data 2, and the session information through different transmission paths, respectively.

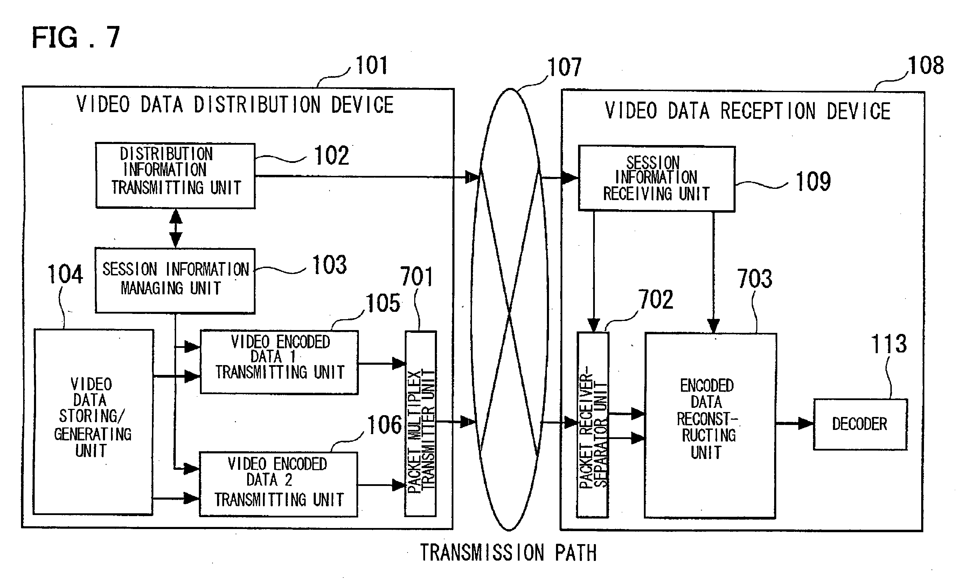

Further, for encrypting and distributing specific video encoded data, as shown in FIG. 7, a structure is possible where outputs of the transmitting units 105 and 106 of the video encoded data 1 and 2 are multiplexed into one session by a packet multiplex transmitter unit 701, and transmitted while the sequence of the video data and/or the discrimination information regarding the compression ratio are added to transmitted packets in the video data distribution device 101. A structure is also possible where the transmitted packets are divided into encoded data and discrimination information by a packet receiver-separator unit 702 of the video data reception device 108, duplicate data are judged based on the sequence obtained from the discrimination information and the information regarding the compression ratio in the encoded data reconstructing unit 703, and data is selected based on the information regarding the compression ratio when there is duplicacy and reconstructed into one piece of encoded data. The similar effects as those of the above mentioned embodiment can be achieved with such structures. For the discrimination information, for instance, the sequence number of an RTP header, a payload type, SSRC, and CSRC can be used, or information corresponding to these can be applied.

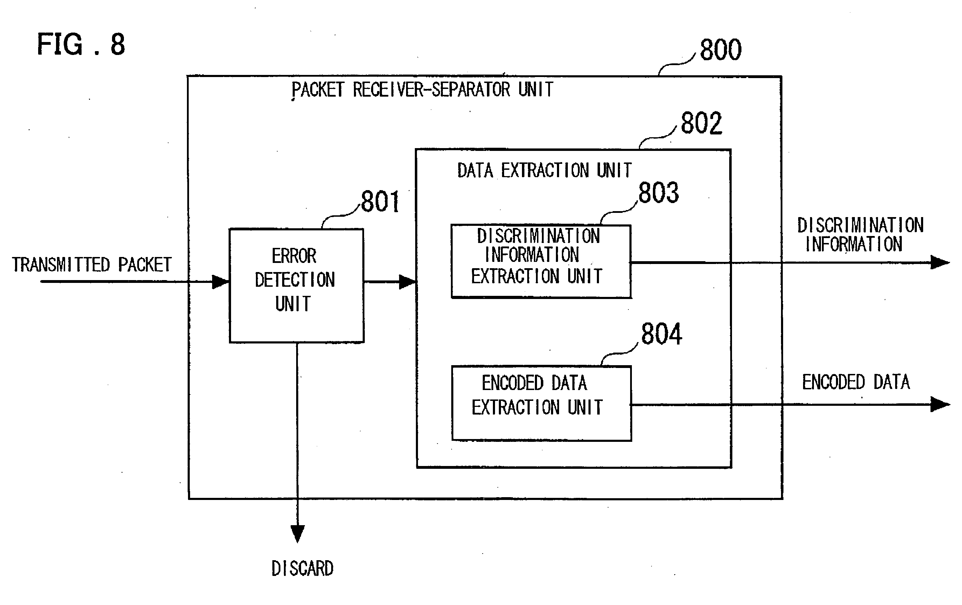

FIG. 8 is a drawing showing an example of the structure of the packet receiver-separator unit 702 in FIG. 7. In reference to FIG. 8, a packet receiver-separator unit 800 (corresponding to the packet receiver-separator unit 702 in FIG. 7) comprises an error detection unit 801 and a data extraction unit 802, and the data extraction unit 802 comprises a discrimination information extraction unit 803 and an encoded data extraction unit 804. In the packet receiver-separator unit 800, a data error of a received packet is detected by the error detection unit 801, and when an error is detected, the received packet is discarded. This corresponds to an error detection by the UDP checksum in the present embodiment. Next, discrimination information and encoded data are extracted in the discrimination information extraction unit 803 and the encoded data extraction unit 804 of the data extraction unit 802. The discrimination information corresponds to, for instance, the sequence number of RTP header, a payload type, SSRC, or CSRC.

Further, not only the structure where all the sessions are multiplexed into one, but also a structure is possible where a plurality of (multiple) packet multiplex transmitter units multiplexing several sessions are provided, and the similar discrimination information is added.

It should be noted that each function and processing of the distribution information transmitting unit 102, the session information managing unit 103, the video data storing/generating unit 104, the video encoded data 1 transmitting unit 105, the video encoded data 2 transmitting unit 106, and the packet multiplex transmitter unit 701 in the video data distribution device 101 can be realized by program control executed on a computer constituting the video data distribution device 101. It should also be noted that each function and processing of the session information receiving unit 109, the video encoded data 1 receiving unit 110 and the video encoded data 2 receiving unit 111, the encoded data reconstructing unit 112, the decoder 113, the packet receiver-separator unit 702, and the encoded data reconstructing unit 703 in the video data reception device 108 can be realized by the program control executed on a computer constituting the video data distribution device 101.

### [THE SECOND EMBODIMENT OF THE INVENTION]

In the second embodiment of the present invention, a video data distribution device comprises means for multicast or broadcast distributing an I picture (Intra-Picture: intraframe encoded picture), a P picture (Predictive-Picture: interframe forward predicted picture), and a B picture (Bi-directionally predictive-Picture: bi-directionally predicted encoded picture) of moving picture, if this exists in the encoding methods used for encoding the moving picture, in different sessions; and means for notifying the session information on at least one session (multicast address, port number, picture kind, etc.), including a quality that a receiver is permitted to receive, to the receiver. The second embodiment of the present invention can further comprise means for selecting whether or not at least one piece of video data should be received based on at least one of the following: the error/loss rate of received data, available power, and predetermined settings.

A video data reception device comprises means for receiving data multicast or broadcast distributed in at least one session out of the session information (multicast address, port number, picture kind, etc.) notified, and means for reconstructing the moving picture data received into one piece of moving picture data and decoding it.

Further, the video data distribution device comprises means for setting whether or not the confidentiality of the distributed data is required, means for securing confidentiality, and the degree of confidentiality for each session of distribution, and means for notifying the setting information regarding confidentiality to the receiver.

The video data reception device comprises means for receiving the confidential information notified, restoring the data received, and decoding the moving picture data.

### [Example 2]

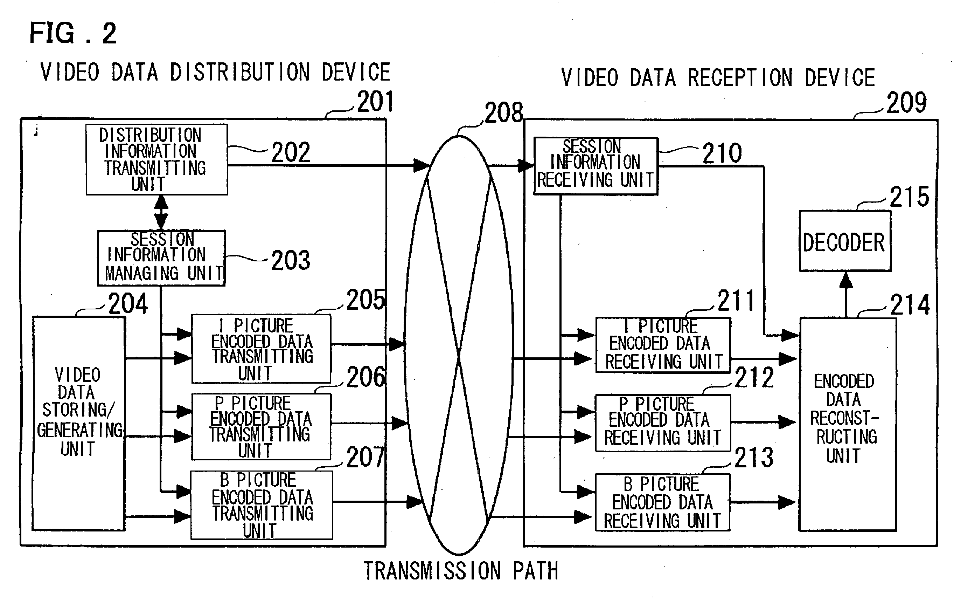

The second example of the present invention will be described with reference to the drawings. FIG. 2 shows the second embodiment of the present invention. As shown in FIG. 2, it comprises a video data distribution device 201, a video data reception device 209, and a transmission path 208 for transmitting the moving picture encoded data. In the present example, the video data distribution device 201 is connected to the transmission path 208, an IP (Internet Protocol) network, and distributes the video encoded data using UDP/IP, and the video data reception device 209 is a client terminal connected to the IP network. For the sake of simplicity, the explanations will be made assuming that there are three frame kinds i.e. I picture, P picture and B picture in the encoding method for the video data distributed.

The video data distribution device 201 comprises a distribution information transmitting unit 202, a session information managing unit 203, a video data storing/generating unit 204, an I picture encoded data transmitting unit 205, a P picture encoded data transmitting unit 206, and a B picture encoded data transmitting unit 207.

The video data reception device 209 comprises a session information receiving unit 210, an I picture encoded data receiving unit 211, a P picture encoded data receiving unit 212, a B picture encoded data receiving unit 213, an encoded data reconstructing unit 214, and a decoder 215. Hereinafter, the operations of the video data distribution device 201 and the video data reception device 209 will be described in order.

In the video data distribution device 201, the video data storing/generating unit 204 transmits:
- video data stored in advance, or
- video data generated in real-time, or
- video data generated by converting existing video data in real-time
based on the information set by the session information managing unit 203 from the I picture encoded data transmitting unit 205, the P picture encoded data transmitting unit 206, and the B picture encoded data transmitting unit 207 via the transmission path 208.

Further, the session information managing unit 203 manages the session information on a session permitted to be distributed to the receiver, and according to the receiver, the session information that should be notified and the information regarding video encoding such as picture kinds (types) is notified by the distribution information transmitting unit 202 to the video data reception device 209.

The I picture encoded data transmitting unit 205, the P picture encoded data transmitting unit 206, and the B picture encoded data transmitting unit 207 have the function of adding information that corresponds to RTP (Real-Time Transport Protocol) so that the order of the data can be correctly rearranged when the order of the data received by the video data reception device 209 is not in order.

When the session information managing unit 203 is set to make the distributed video data confidential, the I picture encoded data transmitting unit 205, the P picture encoded data transmitting unit 206, and the B picture encoded data transmitting unit 207 apply encryption processing according to the settings, and the information regarding encryption such as whether or not any encryption is applied and encryption method is notified by the distribution information transmitting unit 202 to the video data reception device 209.

When the session information, the information regarding video encoding, and the distribution data from the video data distribution device 201 are encrypted, the information regarding the encryption is received by the session information receiving unit 210, and based on this information, the I picture encoded data receiving unit 211, the P picture encoded data receiving unit 212, and the B picture encoded data receiving unit 213 open session receive ports and receive the video data from the transmission path 208. When the video data received is encrypted, the original video data is restored in the I picture encoded data receiving unit 211, the P picture encoded data receiving unit 212, and the B picture encoded data receiving unit 213 according to the information obtained from the session information receiving unit 210.

The session information managing unit 203 sets the information corresponding to the encoding settings of the video encoded data, encoding options (tools used), the payload options of the encoded data, the RTP header payload type that discriminates the encoded data, and/or an SSRC and CSRC, and the settings can be notified to the video data reception device 209 by the distribution information transmitting unit 202, or these pieces of information can be set in advance between the video data distribution device 201 and the video data reception device 209.

The encoded data reconstructing unit 214 reconstructs the I picture, P picture and B picture data received into a stream of moving picture based on the function corresponding to RTP, the sequence number of the RTP header, the payload type, the information from' an SSRC and CSRC, and/or the information received by the session information receiving unit 210, and outputs the result to the decoder 215.

In order for the sender (i.e. on the part of the sender) to control the quality of the video data received by each video data reception device of a receiver A, receiver B, and receiver C, the encoded data of I picture, P picture and B picture are transmitted to the video data reception device of the receiver A , to which the information on all the sessions is notified.

To the video data reception device of the receiver B, the information on the session transmitting the encoded data of I picture and P picture is notified.

To the video data reception device of the receiver C, only the information on the session transmitting the encoded data of I picture is notified.

The video data reception device of the receiver A receives the highest quality video (with the smoothest motion) since it receives the encoded data of all the pictures, the video data reception device of the receiver B receives the second highest quality video, and the video data reception device of the receiver C receives the worst quality video with only the I picture data.

As described above, each receiver (the video data reception device) receives the video with different quality.

Further, in the present example, the difference in the video quality among the receivers can be controlled (ensured) by transmitting the encoded data of the specific picture (type) to only a specific receiver in the unicast system. For instance, the similar effects can be achieved by transmitting the I picture encoded data in multicast or broadcast, transmitting the P picture encoded data to the receivers A and B in the unicast system, and transmitting the B picture encoded data only to the receiver A in the unicast system.

Further, the similar effects can be achieved by encrypting only the P picture and B picture encoded data, notifying the information for restoring the encrypted P picture and B picture encoded data (for instance a public key) to the video data reception device of the receiver A, notifying the information for restoring only the P picture encoded data to the video data reception device of the receiver B, and not notifying any information regarding the encryption to the video data reception device of the receiver C.

Further, the I picture and P picture encode data are distributed in one session, and the B picture encoded data is distributed in another.

The I picture encode data is distributed in one session, and the P picture and B picture encoded data are distributed in another.

The same effects can be achieved by similarly notifying the session information or encrypt information on the distributed data.

In the present example, when the video data reception device 209 is being used in an environment where the available power is limited such as in battery operation, the reception of the B picture encoded data and the P/B picture encoded data can be stopped in order to maximize the operation time of the device. On the other hand, when the video data reception device 209 is connected to a battery with a large capacity or AC power, it can be set to receive the encoded data of all the picture types. As described, according to the available power and reception environment, it can control which data to receive. In the present example, the receiver can be allowed to set the picture encoded data that the video data reception device 209 receives.

A structure having multiple transmission paths, and transmitting the I picture encoded data, the P picture encoded data, the B picture encoded data and the session information through different transmission paths, respectively, is also possible.

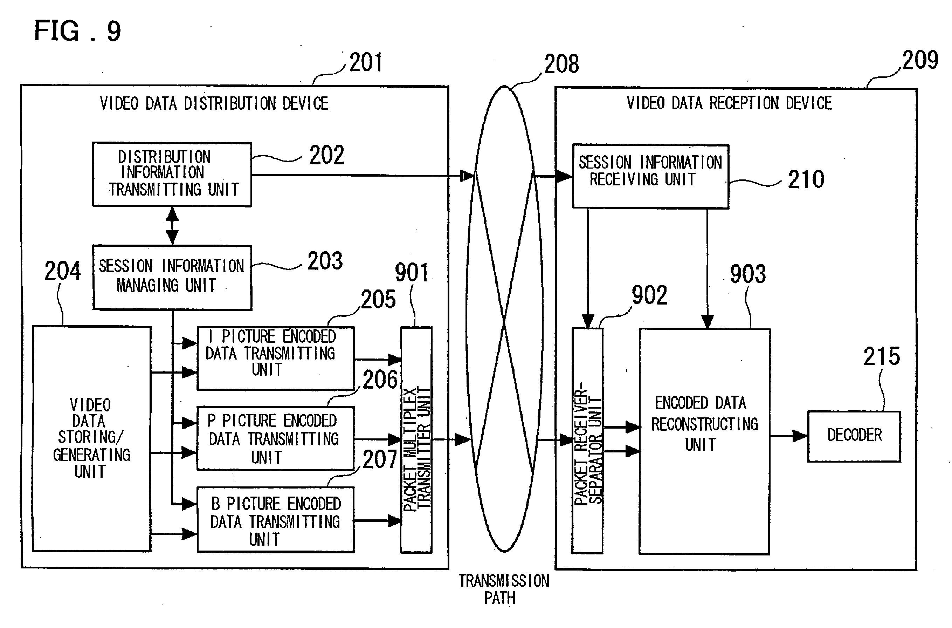

Further, when encrypting and distributing the encoded data of a specific picture type, as shown in FIG. 9, the following structure is possible: Outputs of the transmitting units 205, 206, and 207 of the video data distribution device 201 according to the present example are multiplexed into one session by a packet multiplex transmitter unit 901, and transmitted while the discrimination information regarding the picture type of the video data is applied to transmitted packets, and the transmitted packets are divided into encoded data and discrimination information by a packet receiver-separator unit 902 of the video data reception device 209, and reconstructed into one piece of encoded data by an encoded data reconstructing unit 903 based on the information regarding the picture type obtained from the discrimination information. The similar effects as those of the above mentioned example can be achieved with such structures. For the discrimination information, for instance, the RTP header payload type, an SSRC, and CSRC can be used, or information corresponding to these can be added.

Alternatively, when the sequence number of RTP header or information corresponding thereto is added to each output of the video data distribution device 201 for all the picture types in the present embodiment, the data are reconstructed into one piece (string) of encoded data by rearranging according to the sequence number even without applying the discrimination information regarding the picture types, therefore the similar effects can be achieved.

As for the packet receiver-separator (demultiplexer) unit 902, it does the same processing as that of the packet receiver-separator unit 702 in the first embodiment.

Further, not only the structure where all the sessions are multiplexed into one, but also a structure is possible where multiple packet multiplex transmitter units multiplexing several sessions are provided, and the similar discrimination information is added.

Further, as in the previous embodiment, it should be noted that each function and processing of each unit in the video data distribution device 201 and the video data reception device 209 can be realized by program control executed on a computer constituting the video data distribution device and the video data reception device in the present example as well.

### [THE THIRD EMBODIMENT OF THE INVENTION]

In the third embodiment of the present invention, a video data distribution device comprises means for multicast or broadcast distributing moving picture data and intra macroblock (Intra-MB) encoded data of at least a part of frames of the moving picture in respective different sessions, and means for notifying the session information on at least one session (multicast address, port number, video type, etc.), including a quality that a receiver is permitted to receive, to the receiver.

A video data reception device comprises means for receiving data multicast or broadcast distributed in at least one session out of the session information notified, and means for selecting data from the moving picture data received based on the video quality, and reconstructing it into a piece of moving picture data and decoding it. It may further comprise means for selecting whether or not at least one piece of video data should be received based on at least one of the following: the error/loss rate of received data, available power, and predetermined settings.

Further, the video data distribution device comprises means for setting whether or not the confidentiality of the distributed data is required, means for securing confidentiality, and the degree of confidentiality for each session of distribution, and means for notifying the setting information regarding confidentiality to the receiver, and the video data reception device comprises means for receiving confidential information notified, restoring the data received, and decoding the moving picture data.

### [EXAMPLE 3]

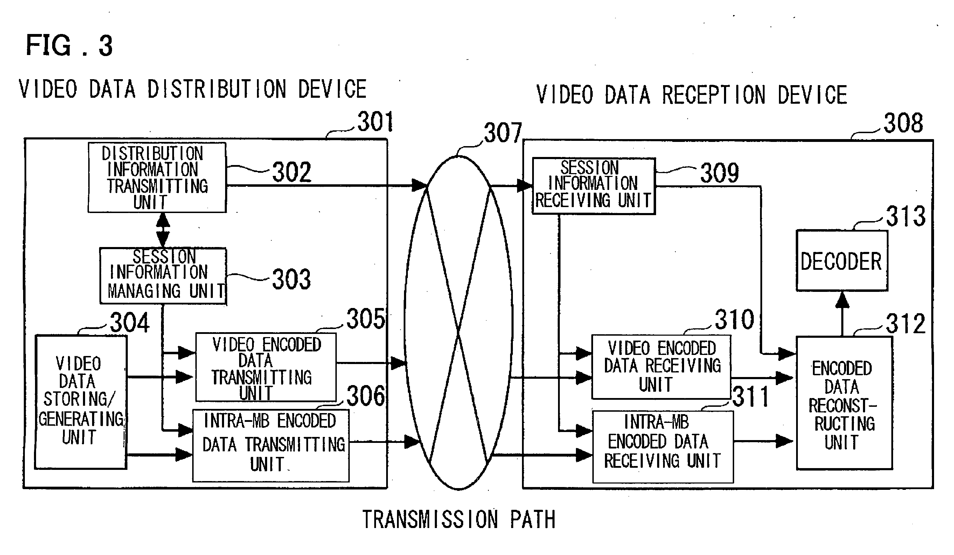

The third example of the present invention will be described with reference to the drawings. FIG. 3 shows the third example of the present invention. As shown in FIG. 3, it comprises a video data distribution device 301, a video data reception device 308, and a transmission path 307 for transmitting the moving picture encoded data. In the present example, the video data distribution device 301 is connected to the transmission path 307, an IP (Internet Protocol) network, and distributes the video encoded data using UDP/IP, and the video data reception device 308 is a client terminal connected to the IP network.

The video data distribution device 301 comprises a distribution information transmitting unit 302, a session information managing unit 303, a video data storing/generating unit 304, a video encoded data transmitting unit 305, and an intra macroblock (Intra-MB) encoded data transmitting unit 306.

The video data reception device 308 comprises a session information receiving unit 309, a video encoded data receiving unit 310, an intra-MB encoded data receiving unit 311, an encoded data reconstructing unit 312 and a decoder (unit) 313. Hereinafter, the operations of the video data distribution device 301 and the video data reception device 308 will be described in order.

In the video data distribution device 301, the video data storing/generating unit 304 transmits:
- video data stored in advance, or
- video data encoded and generated in real-time, or
- video data generated by converting existing video data in real-time
based on the information set by the session information managing unit 303 from the video encoded data transmitting unit 305, and the intra macroblock (Intra-MB) encoded data transmitting unit 306 via the transmission path 307. Further, the session information managing unit 303 manages the information on a session permitted to be distributed to the receiver, and according to the receiver, the session information that should be notified and the information regarding video encoding such as video type is notified by the distribution information transmitting unit 302 to the video data reception device 308. The video encoded data transmitting unit 305 and the intra-MB encoded data transmitting unit 306 have the function of adding information that corresponds to RTP (Real-Time Transport Protocol) so that, in the video data reception device 308, data can be selected when duplicate (redundant) plural (multiple) video data are received, and the order of the data can be correctly rearranged when the order of the data received is out of order. At this time, the same RTP sequence number can be added to the video encoded data in the same region as the video that the intra-macroblock encoded data encodes, and a payload type and/or SSRC and/or CSRC indicating which data it is, the video encoded data or the intra-macroblock, can be added.

When the session information managing unit 303 is set to make the distributed video data confidential (secret), the video encoded data transmitting unit 305 and the intra-MB encoded data transmitting unit 306 apply encryption processing according to the settings, and the information regarding encryption such as whether or not any encryption is applied and encryption method is notified by the distribution information transmitting unit 302 to the video data reception device 308.

When the session information, the information regarding video encoding, and the distribution data from the video data distribution device 301 are encrypted, the video data reception device 308 receives the information regarding the encryption with the session information receiving unit 309, and based on this information, the video encoded data receiving unit 310 and the intra-MB encoded data receiving unit 311 open session receive ports and receive the video data from the transmission path 307. When the video data received is encrypted, the original video data is restored by the video encoded data receiving unit 310 and the intra-MB encoded data receiving unit 311 according to the information obtained from the session information receiving unit 309.

Further, the session information managing unit 303 sets the information corresponding to the encoding settings of the video encoded data, encoding options (tools used), the payload options of the encoded data, the RTP header payload type that discriminates the encoded data, and/or an SSRC and CSRC, and the settings can be notified to the video data reception device 308 by the distribution information transmitting unit 302, or these pieces of information can be set in advance between the video data distribution device 301 and the video data reception device 308.

When both the video encoded data and intra macroblock data are received, according to the video quality, the encoded data reconstructing unit 312 reconstructs duplicate video data into one piece of video data based on the function corresponding to RTP, the sequence number of the RTP header, the payload type, the information from an SSRC and CSRC, and/or the information received by the session information receiving unit 309, and outputs the result to the decoder 313. Only one piece of the video data has to be decoded, therefore, the decode processing load of the decoder 113 does not increase.

In order for the sender (the video data distribution device) to control the qualities of the video data received by each video data reception device of receivers A and B respectively, when the receiver A is permitted to receive the video data of both the video encoded data and intra macroblock encoded data, and the receiver B is permitted to receive the video encoded data only, the session information on both the video encoded data and intra macroblock encoded data is notified to the video data reception device of the receiver A, and the session information on only the video encoded data is notified to the video data reception device of the receiver B.

The video data reception device of the receiver A can receive both the video encoded data and intra macroblock encoded data, and even if an error or loss occurs in the video encoded data, the problematic area will be able to be supplemented if the intra macroblock encoded data is received. The video data reception device of the receiver B can only receive the video encoded data, and when it has any error or loss, the video quality deteriorates.

As described above, the video qualities of the received video are different between the video data reception devices of receivers A and B.

Further, when distributing the same video encoded data and intra macroblock encoded data, if the video encoded data 1 is transmitted in multicast or broadcast and the intra macroblock encoded data is transmitted only to the receiver A in the unicast system, the difference in the stability of the video quality of the received video will occur in this case as well.

Further, the similar effects (difference in the quality of received video image) can be achieved by encrypting only the intra macroblock encoded data, and notifying how to decrypt and restore the encrypted intra macroblock encoded data to the video data reception device of the receiver A, but not to the video data reception device of the receiver B, or encrypting both the video encoded data and the intra macroblock encoded data, notifying how to decrypt and restore both the video encoded data to the video data reception device of the receiver A, and notifying how to decrypt and restore only the video encoded data to the video data reception device of the receiver B.

In the present example, when the video data reception device 308 is being used in an environment where the available power is limited such as in battery operation, and/or when it is used in a good reception environment where it can receive the video encoded data with almost no error and loss, the reception of the intra macroblock encoded data can be stopped in order to maximize the operation time of the device. On the other hand, when the video data reception device 308 is connected to a battery with a large capacity or AC power, it can be set to receive both the video encoded data and intra macroblock encoded data. As described, according to the available power and reception environment, it can control which data to receive. Further, in the present example, the receiver can be allowed to set the kind (type) of video encoded data that the video data reception device 308 receives.

Further, for instance, when the video encoded data is being received accurately and it is interframe (reference frame) encoded data, even if an error and loss occurs in the transmission path, the similar effects as those of CIR (Cyclic Intra Refresh) in the MPEG-4 encoding method will be able to be achieved by having the encoded data reconstructing unit 312 select the intra macroblock encoded data periodically, and the degradation in video playback quality caused by the error and loss in the transmission path can be quickly recovered, to suppress the propagation of the quality degradation over the following frames.

It should be noted that a structure having a plurality of (multiple) transmission paths, and transmitting the video encoded data, the intra macroblock encoded data, and the session information through different transmission paths, respectively, is also possible.

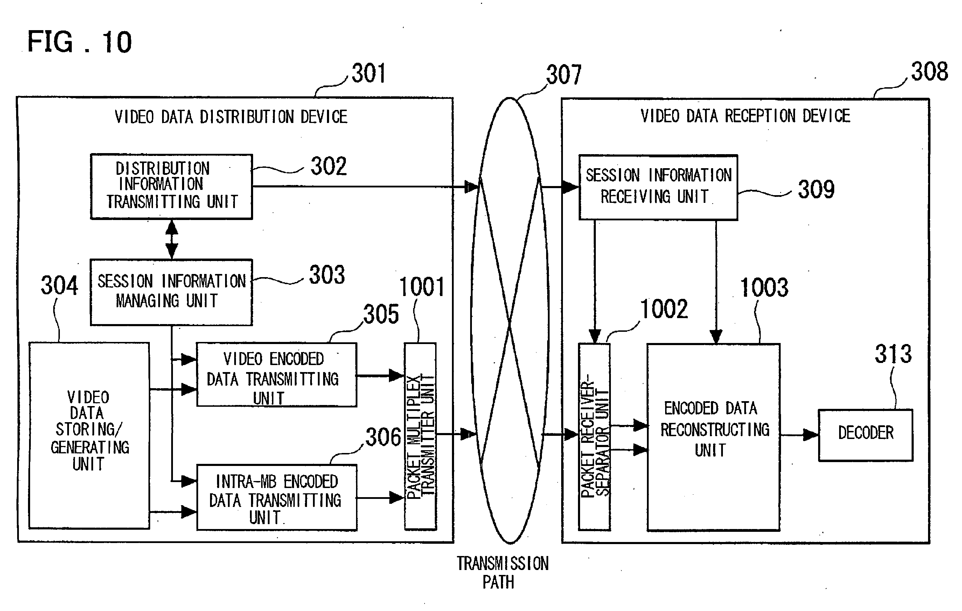

Further, when encrypting and distributing a specific type of the video encoded data, as shown in FIG. 10, the similar effects can be achieved by multiplexing outputs of the video encoded data transmitting unit 305 and the intra macroblock (intra-MB) encoded data transmitting unit 306 of the video data distribution device 301 in the present example into one session by a packet multiplex transmitter unit 1001, transmitting while the discrimination information regarding the data type of the video data is applied to transmitted packets, dividing (demultiplexing) the received packets into encoded data and discrimination information by a packet receiver-separator (demultiplexer) unit 1002 of the video data reception device 308, reconstructing into one piece of encoded data by an encoded data reconstructing unit 1003 based on the information regarding the data type obtained from the discrimination information. For the discrimination information, for instance, the RTP header payload type, SSRC, and CSRC can be used, or information corresponding to these can be applied.

As for the packet receiver-separator unit 1002, it does the same processing as that of the packet receiver-separator unit 702 in the first example.

Further, not only the structure where all the sessions are multiplexed into one, but also a structure where multiple packet multiplex transmitter units multiplexing several sessions are provided, and the similar discrimination information is added is possible.

As in the previous example, it should be noted that each function and processing of each unit in the video data distribution device 301 and the video data reception device 308 can be realized by program control executed on a computer constituting the video data distribution device and the video data reception device in the present example as well.

### [THE FOURTH EMBODIMENT OF THE INVENTION]

In the fourth embodiment of the present invention, a video data distribution device comprises means for multicast or broadcast distributing an I picture, a P picture, a B picture of moving picture, if this exists in the encoding methods used for encoding the moving picture, and intra macroblock (Intra-MB) encoded data of at least a part of frames of the moving picture in different sessions, and means for notifying the session information on at least one session (multicast address, port number, video type, etc.), including a quality that a receiver is permitted to receive, to the receiver.

A video data reception device comprises means for receiving data multicast or broadcast distributed in at least one session out of the session information notified, and means for selecting data from the moving picture data received based on the video quality, and reconstructing it into a piece (string) of moving picture data followed by decoding. The fourth embodiment of the present invention may further comprise means for selecting whether or not at least one piece of video data should be received based on at least one of the following: the error/loss rate of received data, available power, and predetermined settings.

Further, the video data distribution device may comprise means for setting whether or not the confidentiality of the distributed data is required, means for securing confidentiality, and the degree of confidentiality for each session of distribution, and means for notifying the setting information regarding confidentiality to the receiver, and the video data reception device may comprise means for receiving the confidential information notified, restoring the data received, and decoding the moving picture data.

### [Example 4]

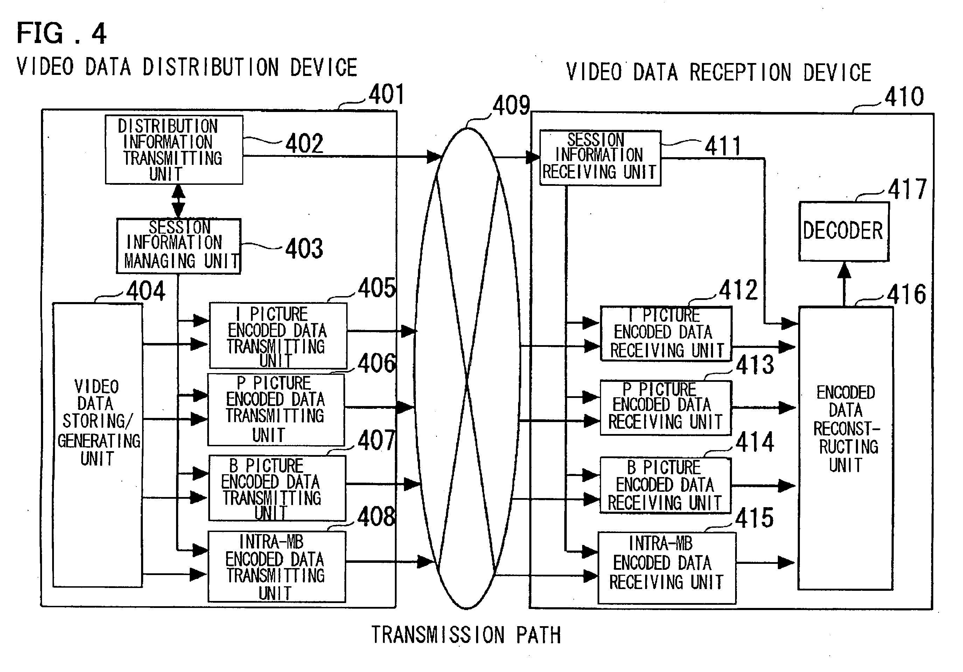

The fourth example of the present invention will be described with reference to the drawings. FIG. 4 shows the fourth example of the present invention. As shown in FIG. 4, it comprises a video data distribution device, a video data reception device, and a transmission path for transmitting the moving picture encoded data. In the present example, the video data distribution device 401 is connected to the transmission path 409, an IP (Internet Protocol) network, and distributes the video encoded data using UDP/IP, and the video data reception device 410 is a client terminal connected to the IP network. For the sake of simplicity, the explanations will be made assuming that there are three frame types i.e. I picture, P picture and B picture in the encoding method for the video data distributed.

The video data distribution device 401 comprises a distribution information transmitting unit 402, a session information managing unit 403, a video data storing/generating unit 404, an I picture encoded data transmitting unit 405, a P picture encoded data transmitting unit 406, a B picture encoded data transmitting unit 407, and an intra macroblock (intra-MB) encoded data transmitting unit 408.

The video data reception device 410 comprises a session information receiving unit 411, an I picture encoded data receiving unit 412, a P picture encoded data receiving unit 413, a B picture encoded data receiving unit 414, an intra-MB encoded data receiving unit 415, an encoded data reconstructing unit 416, and a decoder 417. Hereinafter, the operations of the video data distribution device 401 and the video data reception device 410 will be described in order.

In the video data distribution device 401, the video data storing/generating unit 404 transmits:
- video data stored in advance, or
- video data encoded and generated in real-time, or
- video data generated by converting existing video data in real-time
based on the information set by the session information managing unit 403 from the I picture encoded data transmitting unit 405, the P picture encoded data transmitting unit 406, the B picture encoded data transmitting unit 407, and the intra-MB encoded data transmitting unit 408 via the transmission path 409.

Further, the session information managing unit 403 manages the session information on a session permitted to be distributed to the receiver, and according to the receiver, the session information that should be notified and the information regarding video encoding such as video type is notified by the distribution information transmitting unit 402 to the video data reception device 410.

The I picture encoded data transmitting unit 405, the P picture encoded data transmitting unit 406, the B picture encoded data transmitting unit 407, and the intra-MB encoded data transmitting unit 408 have the function of adding information that corresponds to RTP (Real-Time Transport Protocol) so that, in the video data reception device 410, data can be selected when duplicate multiple video data are received, and the order of the data can be correctly rearranged when the order of the data received is out of order.

At this time, the same RTP sequence number can be added to the video encoded data in the same region as the video that the intra macroblock encoded data encodes, and a payload type and/or SSRC and/or CSRC indicating which data it is, the video encoded data or the intra macroblock, can be added.

When the session information managing unit 403 is set to make the distributed video data confidential, the I picture encoded data transmitting unit 405, the P picture encoded data transmitting unit 406, the B picture encoded data transmitting unit 407, and the intra-MB encoded data transmitting unit 408 apply encryption processing according to the settings, and the information regarding encryption such as whether or not any encryption is applied and encryption method is notified by the distribution information transmitting unit 402 to the video data reception device 410.

The session information, the information regarding video encoding, and when the distribution data from the video data distribution device 401 are encrypted, the information regarding the encryption are received by the session information receiving unit 411, and based on this information, the I picture encoded data receiving unit 412, the P picture encoded data receiving unit 413, the B picture encoded data receiving unit 414, and the intra-MB encoded data receiving unit 415 open session receive ports and receive the video data from the transmission path 409. When the video data received is encrypted, the original video data is restored in the I picture encoded data receiving unit 412, the P picture encoded data receiving unit 413, the B picture encoded data receiving unit 414, and the intra-MB encoded data receiving unit 415 according to the information obtained from the session information receiving unit 411.

The session information managing unit 403 sets the information corresponding to the encoding settings of the video encoded data, encoding options (tools used), the payload options of the encoded data, the RTP header payload type that discriminates the encoded data, and/or an SSRC and CSRC, and the settings can be notified to the video data reception device 410 by the distribution information transmitting unit 402, or these pieces of information can be set in advance between the video data distribution device 401 and the video data reception device 410.

When any one of the picture encoded data and intra macroblock data are both received, according to the video quality, the encoded data reconstructing unit 416 selects the duplicate data, reconstructs the I picture, P picture and B picture, and intra macroblock data received into a stream of moving picture based on the function corresponding to RTP, the sequence number of the RTP header, the payload type, the information from an SSRC and CSRC, and/or the information received by the session information receiving unit 411, and outputs the result to the decoder 417. Only one piece of the video data has to be decoded, therefore, the decode processing load of the decoder 417 does not increase.

In order for the sender (on the part of the sender) to control the qualities of the video data received by each video data reception device of receivers A, B, C, and D respectively, the encoded data of I picture, P picture, B picture, and intra macroblock are transmitted to the video data reception device of the receiver A, to which the information on all the sessions is notified.

To the video data reception device of the receiver B, the information on the session transmitting the encoded data of I picture, P picture and B picture is notified.

To the video data reception device of the receiver C, the information on the session transmitting the encoded data of I picture and P picture is notified.

To the video data reception device of the receiver D, only the information on the session transmitting the encoded data of I picture is notified.

When there is no error or loss in the video encoded data received by the video data reception device of each receiver, the video data reception devices of the receivers A and B receive the highest quality video (with the smoothest motion) since they receive the encoded data of all the pictures.

The video data reception device of the receiver C receives the second highest quality video, and the video data reception device of the receiver D receives the worst quality video with only the I picture data. As described above, each receiver receives the video with different qualities.

If an error or loss occurs in the video encoded data, the video data reception device of the receiver A will be able to supplement the problematic area if it receives the intra macroblock encoded data whereas the video qualities of the receivers B, C, and D will degrade since their video data reception devices don't have the supplementary information. Therefore, the difference in the video quality will occur among the receivers.

Further, in the present example, the difference in the video quality among the receivers can be controlled by transmitting specific encoded data to only a specific receiver in the unicast system. For instance, the similar effects can be achieved by transmitting the I picture encoded data and P picture encoded data in multicast or broadcast as mentioned above, transmitting the B picture encoded data to the receivers A and B in the unicast system, and transmitting the intra macroblock encoded data only to the receiver A in the unicast system.

Further, the similar effects can be achieved by encrypting the P picture, B picture, and intra macroblock encoded data for instance, notifying the information for restoring the encrypted P picture, B picture, and intra macroblock encoded data to the video data reception device of the receiver A, whereas notifying the information for restoring the P picture and B picture encoded data to the video data reception device of the receiver B, notifying the information for restoring the P picture encoded data to the video data reception device of the receiver C, and not notifying any information regarding the encryption to the video data reception device of the receiver D.

In the present example, when the video data reception device 410 is being used in an environment where the available power is limited such as in battery operation, the reception of the intra macroblock encoded data, B picture encoded data, and P picture encoded data can be stopped in order to maximize the operation time of the device. On the other hand, when the video data reception device 410 is connected to a battery with a large capacity or AC power, it can be set to receive the encoded data of all the picture types. As described, according to the available power and reception environment, it can control which data to receive. In the present example, the receiver can be allowed to set the picture encoded data that the video data reception device 410 receives.

Further, the similar effects can be achieved by distributing the I picture and P picture encoded data in one session, the B picture encoded data in one session, the intra macroblock encoded data in one session, the I picture encoded data in one session, the P picture and B picture encoded data in one session, the intra macroblock encoded data in one session, and notifying the session information or the encryption information on the distributed data similarly.

Further, for instance, when the video encoded data is being received accurately and it is interframe (reference frame) encoded data, even if an error or loss occurs in the transmission path, the similar effects as those of CIR (Cyclic Intra Refresh) in the MPEG-4 encoding method will be able to be obtained by having the encoded data reconstructing unit 416 select the intra macroblock encoded data periodically, and the degradation in video playback quality caused by the error or loss in the transmission path can be quickly recovered, suppressing the propagation of the quality degradation over the following frames.

Further, a structure having multiple transmission paths, and transmitting the I picture encoded data, the P picture encoded data, the B picture encoded data, the intra macroblock encoded data, and the session information through different transmission paths is also possible.

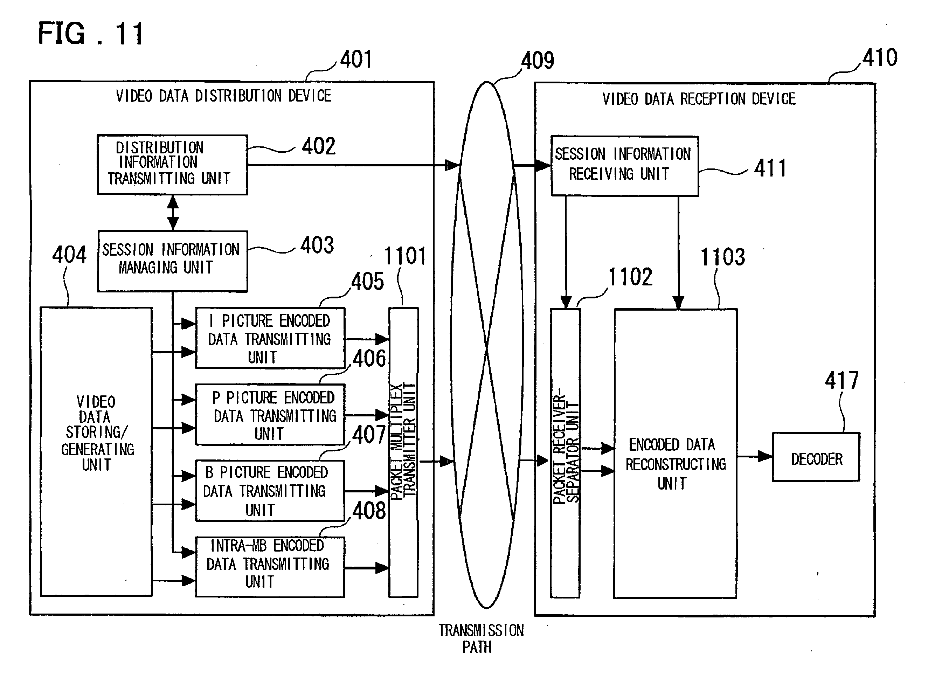

Further, when encrypting and distributing the encoded data of a specific picture, and type, as shown in FIG. 11, the similar effects can be achieved by multiplexing outputs of the I picture encoded data transmitting unit 405, the P picture encoded data transmitting unit 406, the B picture encoded data transmitting unit 407, and the intra macroblock (intra-MB) encoded data transmitting unit 408 of the video data distribution device 401 in the present embodiment into one session by a packet multiplex transmitter unit 1101, transmitting with the discrimination information regarding the compression ratio of the video data and/or the picture type added to transmitted packets, dividing received packets into encoded data and discrimination information by a packet receiver-separator (demultiplexer) unit 1102 of the video data reception device 410, having the encoded data reconstructing unit 1103 determine the duplicacy (redundancy) of the data based on the information regarding the compression ratio and/or the picture type obtained from the video data discrimination information, selecting data based on the information regarding the compression ratio when there is duplicacy (redundancy), and reconstructing it into one piece of encoded data. For the discrimination information, for instance, the RTP header payload type, an SSRC, and CSRC can be used, or information corresponding to these can be added.

Alternatively, when the sequence number of RTP header or information corresponding to it is added to each output of the video data distribution device 401 for all the picture types in the present example, the data are reconstructed into one piece (string) of encoded data by rearranging according to the sequence number without adding the discrimination information regarding the picture type, therefore the similar effects can be achieved.

As for the packet receiver-separator unit 1102, it does the same processing as that of the packet receiver-separator unit 702 in the first embodiment.

Further, not only the structure is possible where all the sessions are multiplexed into one, but also a structure is possible where multiple packet multiplex transmitter units multiplexing several sessions are provided, and the similar discrimination information is added.

Further, as in the previous example, it should be noted that each function and processing of each unit in the video data distribution device 401 and the video data reception device 410 can be realized by program control executed on a computer constituting the video data distribution device and the video data reception device in the present embodiment as well.

### [THE FIFTH EMBODIMENT OF THE INVENTION]

In the fifth embodiment of the present invention, a video data distribution device comprises means for multicast or broadcast distributing a respective I picture, P picture, and if it exists in the encoding methods used for encoding the moving picture, B picture of multiple moving picture data of the same video, the same encoding method, the same frame configuration but having different compression ratios in different sessions, and means for notifying the information on at least one session (multicast address, port number, picture type, etc.), including a quality that a receiver is permitted to receive, to the receiver. A video data reception device comprises means for receiving data multicast or broadcast distributed in at least one session out of the session information notified, and means for selecting data from the moving picture data received based on the video quality, and reconstructing it into a piece (string) of moving picture data, followed by decoding. The fifth embodiment of the present invention can further comprise means for selecting whether or not at least one piece of video data should be received based on at least one of the following: the error/loss rate of received data, available power, and predetermined settings.

Further, the video data distribution device may comprise means for setting whether or not the confidentiality of the distributed data is required, means for securing confidentiality, and the degree of confidentiality for each session of distribution, and means for notifying the setting information regarding confidentiality to the receiver, and the video data reception device may comprise means for receiving the confidential information notified, restoring the data received, and decoding the moving picture data.

### [Example 5]

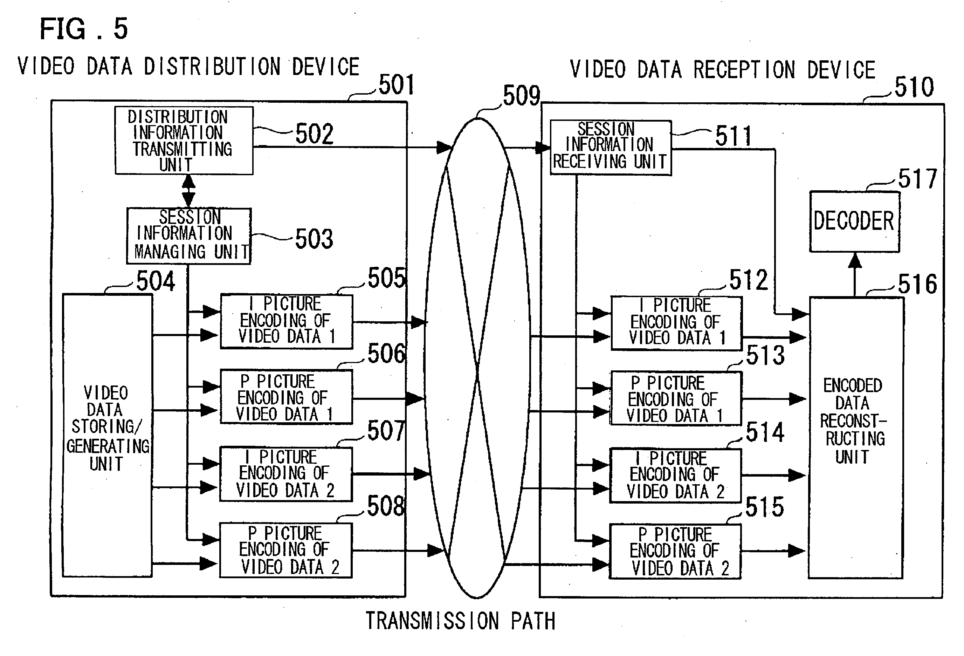

Next, the fifth example of the present invention will be described with reference to the drawings. FIG. 5 shows the structure of the fifth example of the present invention. As shown in FIG. 5, it comprises a video data distribution device, a video data reception device, and a transmission path for transmitting the moving picture encoded data. In the present example, the video data distribution device 501 is connected to the transmission path 509, an IP (Internet Protocol) network, distributes the video encoded data using UDP/IP, and the video data reception device 510 is a client terminal connected to the IP network. For the sake of simplicity, the explanations will be made assuming that there are two frame types i.e. I picture and P picture in the encoding method for the video data distributed, and that the number of distributed video data is 2.

The video data distribution device 501 comprises a distribution information transmitting unit 502, a session information managing unit 503, a video data storing/generating unit 504, an I picture encoded data transmitting unit 505 for video data 1, a P picture encoded data transmitting unit 506 for the video data 1, an I picture encoded data transmitting unit 507 for video data 2, and a P picture encoded data transmitting unit 508 for the video data 2.

The video data reception device 510 comprises a session information receiving unit 511, an I picture encoded data receiving unit 512 for the video data 1, a P picture encoded data receiving unit 513 for the video data 1, an I picture encoded data receiving unit 514 for the video data 2, a P picture encoded data receiving unit 515 for the video data 2, an encoded data reconstructing unit 516, and a decoder 517.

Hereinafter, the operations of the video data distribution device 501 and the video data reception device 510 will be described in order.

The video data distribution device 501 has the video data storing/generating unit 504 transmit:
- video data stored in advance, or
- video data encoded and generated in real-time, or
- video data generated by converting existing video data in real-time
based on the information set by the session information managing unit 503 from the I picture encoded data transmitting unit 505 for the video data 1, the P picture encoded data transmitting unit 506 for the video data 1, the I picture encoded data transmitting unit 507 for the video data 2, and the P picture encoded data transmitting unit 508 for the video data 2 via the transmission path 509.

Further, the session information managing unit 503 manages the information on a session permitted to be distributed to the receiver, and according to the receiver, the session information that should be notified and the information regarding video encoding such as video quality and picture type is notified by the distribution information transmitting unit 502 to the video data reception device 510.

The I picture encoded data transmitting unit 505 for the video data 1, the P picture encoded data transmitting unit 506 for the video data 1, the I picture encoded data transmitting unit 507 for the video data 2, and the P picture encoded data transmitting unit 508 for the video data 2 have the function of adding information that corresponds to RTP (Real-Time Transport Protocol) so that, in the video data reception device 510, data can be selected when duplicate (redundant) multiple video data are received, and the order of the data can be correctly rearranged when the order of the data received is out of order.

At this time, by transmitting the I picture encoded data of the video data 1 and the I picture encoded data of the video data 2, and the P picture encoded data of the video data 1 and the P picture encoded data of the video data 2 with a time lag longer than the burst length of data error or loss in the transmission path 509 respectively, the possibility of any error or loss influencing both the video encoded data in the transmission path is reduced, and a more stable distribution of video data can be achieved.

As for the time lag between transmissions, the distribution information transmitting unit 502 can notify the time lag, managed by the session information managing unit 503, to the video data reception device 510, or the receive buffer size can be set by the video data reception device 510 based on the time lag that the video data distribution device 501 and the video data reception device 510 decide in advance.

When the session information managing unit 503 is set to make the distributed video data confidential (secret), the I picture encoded data transmitting unit 505 for the video data 1, the P picture encoded data transmitting unit 506 for the video data 1, the I picture encoded data transmitting unit 507 for the video data 2, and the P picture encoded data transmitting unit 508 for the video data 2 apply encryption processing according to the settings, and the information regarding encryption such as whether or not any encryption is applied and encryption method is notified by the distribution information transmitting unit 502 to the video data reception device 510.

When the session information, the information regarding video encoding, and the distribution data from the video data distribution device 501 are encrypted, the video data reception device 510 has the session information receiving unit 511 receive the information regarding the encryption, and based on this information, the I picture encoded data receiving unit 512 for the video data 1, the P picture encoded data receiving unit 513 for the video data 1, the I picture encoded data receiving unit 514 for the video data 2, and the P picture encoded data receiving unit 515 for the video data 2 open session receive ports and receive the video data from the transmission path 509. When the video data received is encrypted, the original video data is restored according to the information obtained from the session information receiving unit 511.

Further, the session information managing unit 503 sets the information corresponding to the encoding settings of the video encoded data 1 and the video encoded data 2, encoding options (tools used), the payload options of the encoded data, the RTP header payload type that discriminates the encoded data, and/or an SSRC and CSRC, and the settings are notified to the video data reception device 510 by the distribution information transmitting unit 502, or these pieces of information can be set in advance between the video data distribution device 501 and the video data reception device 510.

When the encoded data of the I picture of the video data 1, the P picture of the video data 1, the I picture of the video data 2, and the P picture of the video data 2 are received, the encoded data reconstructing unit 516 selects data according to the video quality, reconstructs it into a stream of moving picture based on the function corresponding to RTP, the sequence number of the RTP header, the payload type, the information from an SSRC and CSRC, and/or the information received by the session information receiving unit 511, and outputs the result to the decoder 517. Only one piece of the video data has to be decoded, therefore, the decode processing load of the decoder 517 does not increase.

In order for the sender (on the part of the sender) to control the quality of the video data received by a receiver A, receiver B, and receiver C, the video data 1 and the video data 2 are given different qualities (compression ratios) and for instance, the video data 1 is given a higher quality.

The information on all the sessions, in which the encoded data of the I picture of the video data 1, the P picture of the video data 1, the I picture of the video data 2, and the P picture of the video data 2 are transmitted to the video data reception device of the receiver A is notified.

To the video data reception device of the receiver B, the information on a session transmitting all the encoded data of the I picture of the video data 1, the I picture of the video data 2, and the P picture of the video data 2 is notified.

To the video data reception device of the receiver C, only the information on a session transmitting the encoded data of the I picture of the video data 2 and the P picture of the video data 2 is notified.

The video data reception device of the receiver A receives the highest quality video (with the smoothest motion) since it receives all the encoded data, and even when there is an error or loss in the video data of the video encoded data 1, the problematic area can be supplemented with the video data of the video encoded data 2.

The video data reception device of the receiver B receives the second highest quality video, and even when there is an error or loss in the I picture encoded data of the video encoded data 1, the problematic area can be supplemented with the I picture encoded data of the video encoded data 2.

The video data reception device of the receiver C can only receive encoded data with a high compression ratio.

As described above, each receiver receives the video with a different quality from one another.

Further, the difference in the video quality among the receivers can be controlled by transmitting specific encoded data to only a specific receiver in the unicast system. For instance, the similar effects can be achieved by transmitting the I picture and P picture encoded data of the video data 2 in multicast or broadcast, transmitting the I picture encoded data of the video data 1 to the receivers A and B in the unicast system, and transmitting the P picture encoded data of the encoded data 1 only to the video data reception device of the receiver A in the unicast system.

Further, when the session information on a session transmitting the I picture and B picture encoded data of the video data 1 is notified to the video data reception devices of all the receivers, the session information on a session transmitting the I picture encoded data of the video data 2 is notified to the video data reception devices of the receivers A and B, and the information on a session transmitting the P picture encoded data of the video data 2 is notified to the video data reception device of the receiver A, the receiver C cannot supplement it when an error or loss occurs in the data received, however, with the encoded data of the video data 2, the receiver B can supplement the error or loss if it occurs in the I picture encoded data and the receiver A can supplement it in the encoded data of both the pictures, and thus resulting in differences in the stability of the video quality among the receivers.

Further, if the video encoded data 1 and the video encoded data 2 have the same quality, or if the video encoded data 1 is transmitted from the video encoded data 1 transmitting units 505 and 506, and the video encoded data 2 transmitting units 507 and 508, it will be possible to keep the degradation in video playback quality, influenced by an error or loss in the transmission path, to a minimum.

Additionally, when the I picture encoded data of the video data 1 and the P picture encoded data of the video data 1 are transmitted in multicast or broadcast, the I picture encoded data of the video data 2 is transmitted to both the receivers A and B in the unicast system, and the P picture encoded data of the video data 2 is transmitted to the receiver A in the unicast system, a similar difference in the stability of the video quality still occurs. In this case, since the bandwidth of the video encoded data transmitted in the unicast system is smaller, it is more preferable for suppressing the increase in traffic.

Further, the similar effects (the differences in the quality of the video received among the receivers) can be achieved by encrypting the I picture and P picture encoded data of the video data 1 for instance, notifying information for restoring the encrypted video data 1 to the video data reception device of the receiver A, notifying only information for restoring the I picture encoded data of the video data 1 to the video data reception device of the receiver B, and not notifying any information regarding the encryption to the video data reception device of the receiver C.

In the present embodiment, when the video data reception device 510 is being used in an environment where the available power is limited such as in battery operation, and/or when it is used in a good reception environment where it can receive the video encoded data with almost no error and loss, receptions of the P picture encoded data of the video data 2 and the I picture encoded data of the video data 2 can be stopped in order to maximize the operable time of the device. On the other hand, when the video data reception device 510 is connected to a battery with a large capacity or AC power, it can be set to receive the encoded data of all the pictures. As described, according to the available power and reception environment, it can control which data to receive. Further, in the present example, the receiver can be allowed to set the picture encoded data that the receiver receives on the video data reception device 510.

It should be noted that the following structure is also possible, i.e., a structure having multiple transmission paths, and transmitting the I picture encoded data of the video data 1, the P picture encoded data of the video data 1, the I picture encoded data of the video data 2, the P picture encoded data of the video data 2, and the session information through different transmission paths.

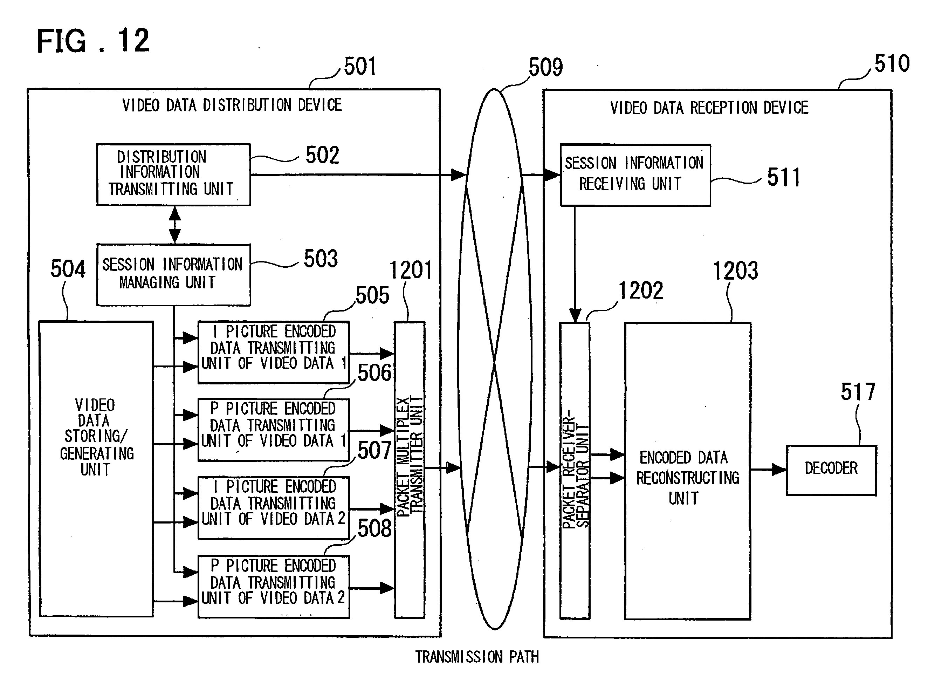

Further, when encrypting and distributing specific video encoded data, as shown in FIG. 12, the similar effects can be achieved by the following formulation: multiplexing each output of the video data distribution device 501 according to the present invention into one session by a packet multiplex transmitter unit 1201; transmitting with the discrimination information regarding the compression ratio of the video data and the picture type added to transmitted packets; separating (demultiplexing) received packets into encoded data and discrimination information by a packet receiver-separator unit 1202 of the video data reception device 510; having the encoded data reconstructing unit 1203 determine the duplicacy (redundancy) of the data based on the information regarding the compression ratio and the picture type obtained from the discrimination information; selecting data based on the information regarding the compression ratio when there is duplicacy (redundancy); and reconstructing it into one piece (string) of encoded data. For the discrimination information, for instance, the RTP header payload type, an SSRC, and CSRC can be used, or information corresponding to these can be added.

When the sequence number of RTP header or information corresponding to it is added to each output of the video data distribution device 501 for all the picture types, the data are reconstructed into one piece (string) of encoded data by rearranging according to the sequence number without adding the discrimination information regarding the picture type, therefore the similar effects can be achieved.

As for the packet receiver-separator unit 1202, it does the same processing as that of the packet receiver-separator unit 702 in the first example.

Further, not only the structure where all the sessions are multiplexed into one, but also a structure where multiple packet multiplex transmitter units multiplexing several sessions are provided, and the similar discrimination information is added is possible.

Further, as in the previous example, it should be noted that each function and processing of each unit in the video data distribution device 501 and the video data reception device 510 can be realized by program control executed on a computer constituting the video data distribution device and the video data reception device in the present embodiment as well.

### [THE SIXTH EMBODIMENT OF THE INVENTION]

In the sixth embodiment of the present invention, a video data distribution device comprises means for multicast or broadcast distributing, in different sessions, an I picture, a P picture, and a B picture, if this exists in the encoding methods used for encoding the moving picture, of multiple moving picture data of the same video, the same encoding method, the same frame configuration but having different compression ratios, and intra macroblock (Intra-MB) encoded data of at least a part of frames of the moving picture; and means for notifying the session information on at least one session (multicast address, port number, video quality, video type, etc.), including a quality that a receiver is permitted to receive, to the receiver.

A video data reception device comprises means for receiving data multicast or broadcast distributed in at least one session out of the session information notified; and means for selecting data from the moving picture data received based on the video quality, and reconstructing it into a piece of moving picture data followed by decoding. The sixth embodiment of the present invention may further comprise means for selecting whether or not at least one piece of video data should be received based on at least one of the following: the error/loss rate of received data, available power, and predetermined settings.

Further, the video data distribution device may comprise means for setting whether or not the confidentiality (secrecy) of the distributed data is required; means for securing confidentiality, and the degree of confidentiality for each session of distribution; and means for notifying the setting information regarding confidentiality to the receiver, and the video data reception device may comprise means for receiving the confidential information notified, restoring the data received, and decoding the moving picture data.

### [Example 6]

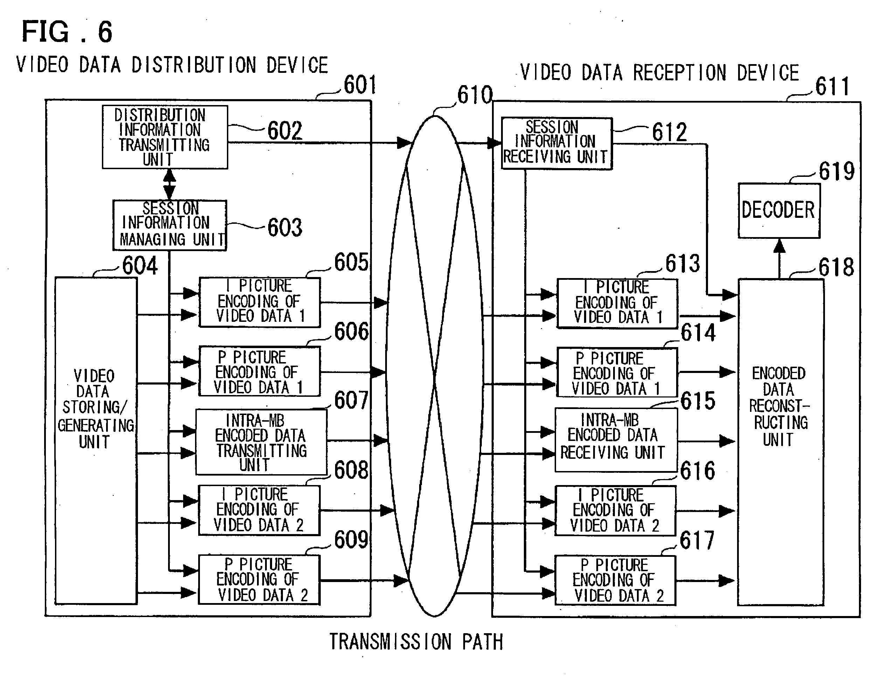

The sixth example of the present invention will be described with reference to the drawings. FIG. 6 shows the structure of the sixth embodiment of the present invention. As shown in FIG. 6, it comprises a video data distribution device 601, a video data reception device 611, and a transmission path 610 for transmitting the moving picture encoded data. In the present embodiment, the video data distribution device 601 is connected to the transmission path 610, an IP (Internet Protocol) network, and distributes the video encoded data using UDP/IP, and the video data reception device 611 is a client terminal connected to the IP network. For the sake of simplicity, the explanations will be made assuming that there are two frame types i.e. I picture and P picture in the encoding method for the video data distributed, and that the number of distributed video data is 2.

The video data distribution device 601 comprises a distribution information transmitting unit 602, a session information managing unit 603, a video data storing/generating unit 604, an I picture encoded data transmitting unit 605 for video data 1, a P picture encoded data transmitting unit 606 for video data 1, an intra macroblock (intra-MB) encoded data transmitting unit 607, an I picture encoded data transmitting unit 608 for video data 2, and a P picture encoded data transmitting unit 609 for the video data 2.

The video data reception device 611 comprises a session information receiving unit 612, an I picture encoded data receiving unit 613 for the video data 1, a P picture encoded data receiving unit 614 for the video data 1, an intra macroblock (intra-MB) encoded data receiving unit 615, an I picture encoded data receiving unit 616 for the video data 2, a P picture encoded data receiving unit 617 for the video data 2, an encoded data reconstructing unit 618, and a decoder 619. Hereinafter, the operations of the video data distribution device 601 and the video data reception device 610 will be described in order.

The video data distribution device 601 has the video data storing/generating unit 604 transmit via the transmission path 610:
- video data stored in advance, or
- video data encoded and generated in real-time, or
- video data generated by converting existing video data in real-time
based on the information set by the session information managing unit 603 from the I picture encoded data transmitting unit 605 for the video data 1, the P picture encoded data transmitting unit 606 for the video data 1, the intra-MB encoded data transmitting unit 607, the I picture encoded data transmitting unit 608 for the video data 2, and the P picture encoded data transmitting unit 609 for the video data 2.

Further, the session information managing unit 603 manages the session information on a session allowed to be distributed to the receiver, and according to the receiver, the session information that should be notified and the information regarding video encoding such as video quality and picture type is notified by the distribution information transmitting unit 602 to the video data reception device 611.

The I picture encoded data transmitting unit 605 for the video data 1, the P picture encoded data transmitting unit 606 for the video data 1, the intra-MB encoded data transmitting unit 607, the I picture encoded data transmitting unit 608 for the video data 2, and the P picture encoded data transmitting unit 609 for the video data 2 have the function of adding information that corresponds to RTP (Real-Time Transport Protocol) so that data can be selected when duplicate (redundant) plural (multiple) video data are received by the video data reception device 611, and the order of the data can be correctly rearranged when the order of the data received is out of order. Further, the respective transmission unit of the I picture encoded data of the video data 1 and the I picture encoded data of the video data 2, and the P picture encoded data of the video data 1 and the P picture encoded data of the video data 2 is data obtained by encoding the same part of the same frame of the same video (image), the same RTP sequence number is added to these data and the intra macroblock encoded data obtained by encoding the same part as these data, and further a payload type and/or SSRC and/or CSRC identifying video encoded data may be added as well.

At this time, by transmitting the I picture encoded data of the video data 1 and the I picture encoded data of the video data 2, and the P picture encoded data of the video data 1 and the P picture encoded data of the video data 2 with a time lag longer than the burst length of data error or loss in the transmission path 610 respectively, the possibility of any error or loss influencing both the video encoded data in the transmission path is reduced, and a more stable distribution of video data can be achieved.

As for the time lag between transmissions, the distribution information transmitting unit 602 can notify the time lag, managed by the session information managing unit 603, to the video data reception device 611, or the receive buffer size can be set by the video data reception device 611 based on the time lag that can be determined in advance between the video data distribution device 601 and the video data reception device 611 decide in advance.

When the session information managing unit 603 is set to make the distributed video data confidential, the I picture encoded data transmitting unit 605 for the video data 1, the P picture encoded data transmitting unit 606 for the video data 1, the intra-MB encoded data transmitting unit 607, the I picture encoded data transmitting unit 608 for the video data 2, and the P picture encoded data transmitting unit 609 for the video data 2 apply encryption processing according to the settings, and the information regarding encryption such as whether or not any encryption is applied and encryption method is notified by the distribution information transmitting unit 602 to the video data reception device 611.

As for the video data reception device 611, the session information, the information regarding video encoding, and the information on encryption if the distribution data from the video data distribution device 601 are encrypted, are received the session information receiving unit 612, and based on this information, the I picture encoded data receiving unit 613 for the video data 1, the P picture encoded data receiving unit 614 for the video data 1, the intra-MB encoded data receiving unit 615, the I picture encoded data receiving unit 616 for the video data 2, and the P picture encoded data receiving unit 617 for the video data 2 open session receive ports, and receive the video data from the transmission path 610. When the video data received is encrypted, the original video data is restored according to the information obtained from the session information receiving unit 612.

Further, the session information managing unit 603 may set the information corresponding to the encoding settings of the video encoded data 1 and the video encoded data 2, encoding options (tools used), the payload options of the encoded data, the RTP header payload type that discriminates the encoded data, and/or an SSRC and CSRC, and the settings may be notified to the video data reception device 611 by the distribution information transmitting unit 602, or these pieces of information may be set in advance between the video data distribution device 601 and the video data reception device 611.

When the encoded data of the I picture of the video data 1, the P picture of the video data 1, the intra macroblock, the I picture of the video data 2, and the P picture of the video data 2 are received, the encoded data reconstructing unit 618 selects data according to the video quality, reconstructs it into a stream of moving picture based on the function corresponding to RTP, the sequence number of the RTP header, the payload type, the information from an SSRC and CSRC, and/or the information received by the session information receiving unit 612, and outputs the result to the decoder 619. Only one piece (string) of the video data has to be decoded, therefore, the decode processing load of the decoder 619 does not increase.

In order for the sender (on the part of the sender) to control the quality of the video data received by the respective video data reception device of a receiver A, receiver B, receiver C, and receiver D, the video data 1 and the video data 2 are given different qualities (compression ratios) and for instance, the video data 1 is given a higher quality.

To the video data reception device of the receiver A the information on a session transmitting the encoded data of the I picture of the video data 1, the P picture of the video data 1, the I picture of the video data 2, and the P picture of the video data 2 is notified.

To the video data reception device of the receiver B, the information on a session transmitting the encoded data of the I picture of the video data 1, the I picture of the video data 2, and the P picture of the video data 2 is notified.

To the video data reception device of the receiver C, only the information on a session transmitting the encoded data of the intra macroblock, the I picture of the video data 2, and the P picture of the video data 2 is notified.

To the video data reception device of the receiver D, only the information on a session transmitting the encoded data of the I picture of the video data 2 and the P picture of the video data 2 is notified.

The video data reception device of the receiver A can receive the highest quality video (with the smoothest motion) since it receives all the encoded data, and even when there is an error or loss in the video data of the video encoded data 1, the problematic area can be supplemented with the video data of the video encoded data 2.

The video data reception device of the receiver B can receive the second highest quality video, and even when there is an error or loss in the I picture encoded data of the video encoded data 1, the problematic area can be supplemented with the I picture encoded data of the video encoded data 2.

The video data reception device of the receiver C only receives the video data 2 and the intra macroblock encoded data with a high compression ratio, however, even when there is an error or loss in the received encoded data, the problematic area will be supplemented if the intra macroblock encoded data of the same area are received.

The video data reception device of the receiver D only receives the video data 2 with a high compression ratio, and when there is an error or loss in the data, the video quality will degrade.

As described above, each receiver receives the video with a different quality from one another.

Further, according to the present example, the difference in the video quality among the receivers can be controlled by transmitting specific encoded data to only a specific receiver in the unicast system. For instance, the similar effects as above can be achieved by transmitting the I picture and P picture encoded data of the video data 2 in multicast or broadcast, transmitting the intra macroblock encoded data to the video data reception device of the receiver C in the unicast system, transmitting the I picture encoded data of the video data 1 to the reception devices of the receivers A and B in the unicast system, and transmitting the P picture encoded data of the encoded data 1 only to the video data reception device of the receiver A in the unicast system.

Further, when the session information on a session transmitting the I picture and B picture encoded data of the video data 1 is notified to the video data reception devices of all the receivers; the session information on a session transmitting the intra macroblock encoded data is notified to the video data reception device of the receiver C; the session information on a session transmitting the I picture encoded data of the video data 2 is notified to the video data reception devices of the receivers A and B; and the session information on a session transmitting the P picture encoded data of the video data 2 is notified to the video data reception device of the receiver A, the receiver D cannot supplement it when an error or loss occurs in the data received, however, the receiver C can supplement the error or loss if the intra macroblock encoded data of the area concerned is received, the receiver B can supplement an error or loss in the I picture encoded data with the encoded data of the video data 2, and the receiver A can supplement it in the encoded data of either one of both the pictures with the encoded data of the video data 2, resulting in differences in the stability of the video quality among the receivers.

Further, if the video encoded data 1 and the video encoded data 2 have the same quality, or the video encoded data 1 is transmitted from the video encoded data 1 transmitting units 605 and 606, and the video encoded data 2 transmitting units 608 and 609, it will be possible to keep the degradation in video playback quality, influenced by an error or loss in the transmission path, to a minimum.

Additionally, when the I picture encoded data of the video data 1 and the P picture encoded data of the video data 1 are transmitted in multicast or broadcast, the intra macroblock encoded data is transmitted to the receiver C in the unicast system, the I picture encoded data of the video data 2 is transmitted to both the receivers A and B in the unicast system, and the P picture encoded data of the video data 2 is transmitted to the receiver A in the unicast system, a similar difference in the stability of the video quality occurs as well. In this case, since the bandwidth of the video encoded data transmitted in the unicast system is smaller, it is more preferable for suppressing the increase in traffic.

Further, the similar effects can be achieved by encrypting the I picture, P picture, and the intra macroblock encoded data of the video data 1 for instance, notifying the information for restoring the encrypted video data 1 to the video data reception device of the receiver A, notifying only the information for restoring the I picture encoded data of the video data 1 to the video data reception device of the receiver B, notifying only the information for restoring the intra macroblock encoded data to the video data reception device of the receiver C, and not notifying any information regarding the encryption to the video data reception device of the receiver D.

In the present embodiment, when the video data reception device 611 is being used in an environment where the available power is limited such as in battery operation, and/or when it is used in a good reception environment where it can receive the video encoded data with almost no error and loss, the receptions of the intra macroblock data and/or the P picture encoded data of the video data 2, or further the I picture encoded data of the video data 2 can be stopped in order to maximize the operation time of the device. On the other hand, when it is connected to a battery with a large capacity or AC power, it can be set to receive the encoded data of all the pictures. As described, according to the available power and reception environment, it can control which data to receive. Further, it is also possible to formulate such that the receiver can be allowed to set the picture encoded data that the video data reception device 611 receives.

Further, for instance, in case where the video encoded data is being received accurately and it is interframe (reference frame) encoded data, even if an error and loss occur in the transmission path, the similar effects as those of CIR (Cyclic Intra Refresh) in the MPEG-4 encoding method will be able to be achieved by having the encoded data reconstructing unit 618 select the intra macroblock encoded data periodically, and the degradation in video playback quality caused by the error and loss in the transmission path can be quickly recovered, suppressing the propagation of the quality degradation over the following frames.

It should be noted that the following structure is also possible, i.e., a structure having a plurality (multiple) transmission paths, and transmitting the I picture encoded data of the video data 1, the P picture encoded data of the video data 1, the intra macroblock encoded data, the I picture encoded data of the video data 2, the P picture encoded data of the video data 2, and the session information through different transmission paths.

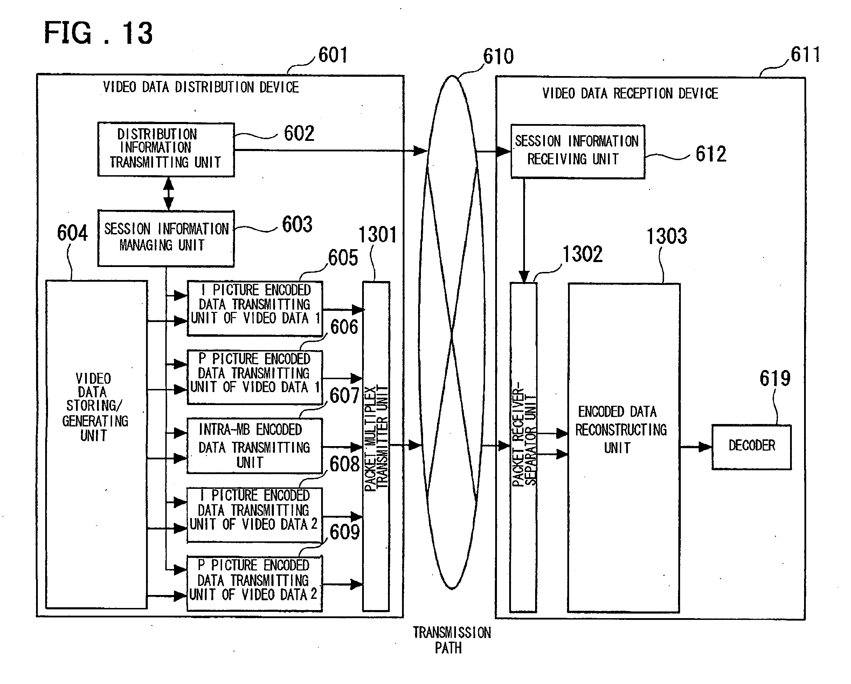

Further, when encrypting and distributing specific video encoded data, as shown in FIG. 13, the similar effects can be achieved by the following configuration based on multiplexing into one session, i.e., multiplexing each output of the I picture encoded data transmitting unit 605 for the video data 1, the P picture encoded data transmitting unit 606 for the video data 1, the intra macroblock encoded data transmitting unit 607, the I picture encoded data transmitting unit 608 for the video data 2, and the P picture encoded data transmitting unit 609 for the video data 2 in the video data distribution device 601 according to the present invention into one session by a packet multiplex transmitter unit 1301; transmitting with the discrimination information regarding the compression ratio of the video data and the picture type added to transmitted packets; separating (demultiplexing) received packets into encoded data and discrimination information by a packet receiver-separator (demultiplexer) unit 1302 of the video data reception device 611; having the encoded data reconstructing unit 1303 determine the duplicacy (redundancy) of the data based on the information regarding the compression ratio and the picture type obtained from the discrimination information; selecting data based on the information regarding the compression ratio when there is duplicacy (redundancy), and reconstructing it into one piece (string) of encoded data. For the discrimination information, for instance, the RTP header payload type, an SSRC, and CSRC can be used, or information corresponding to these can be added.

In case where the sequence number of RTP header or information corresponding thereto is added to each output of the video data distribution device 601 for all the picture types, the data are reconstructed into one piece (stream) of encoded data by rearranging according to the sequence number and the discrimination information on the video data type, without adding the discrimination information regarding the picture type, therefore the similar effects can be achieved.

As for the packet receiver-separator unit 1302, it does the similar processing as that of the packet receiver-separator unit 702 in the first embodiment.

Further, not only the structure where all the sessions are multiplexed into one session, but also the following structure is possible where a plurality of packet multiplex transmitter units multiplexing some or several sessions are provided, and the similar discrimination information is added.

As in the previous examples, it should be noted that each function and processing of each unit in the video data distribution device 601 and the video data reception device 611 can be realized by program control executed on a computer constituting the video data distribution device and the video data reception device in the present example as well.

## Claims

1. A video data distribution device comprising:
means for multicast or broadcast distributing video encoded data of the same video, but having different compression ratios; and
means for selecting a session of multicast or broadcast distribution according to the compression ratio.

2. A video data distribution device comprising:
means for multicast or broadcast distributing video encoded data of the same video, but having different compression ratios; and
means for controlling the quality of a video received by a receiver by changing, according to the receiver, session information to be notified.

3. A video data distribution device comprising:
means for multicast or broadcast distributing video encoded data of the same video, but having different compression ratios; and
means for setting information including whether or not confidentiality of video encoded data is required, confidentiality method when confidentiality is required, and/or the degree of confidentiality for each session of distribution selected according to the compression ratio.

4. The video data distribution device as defined in any one of claims 1 to 3 wherein said video encoded data of the same video, but having different compression ratios are based on the same encoding method and frame configuration.

5. A video data distribution device comprising:
means for multicast or broadcast distributing video encoded data; and
means for selecting a session of multicast or broadcast distribution according to the kind of video frame and/or video block.

6. A video data distribution device comprising:
means for multicast or broadcast distributing video encoded data having different video frame and/or video block kinds; and
means for controlling the quality of a video received by a receiver by changing session information notified according to the receiver.

7. A video data distribution device comprising:
means for multicast or broadcast distributing video encoded data; and
means for setting information including whether or not confidentiality is required for distributed data, confidentiality method when confidentiality is required, and/or the degree of confidentiality for each session of distribution selected according to the kind of the video frame and/or video block.

8. A video data distribution device comprising:
means for multicast or broadcast distributing video encoded data having different information including whether or not confidentiality is required for distributed data, confidentiality method when confidentiality is required, and/or the degree of confidentiality in at least one session of distribution; and
means for controlling the quality of a video received by a receiver by changing information regarding confidentiality notified according to the receiver.

9. The video data distribution device as defined in claim 1 comprising:
means for managing information on a permitted session of distribution to a video data reception device, and notifying session information that should be notified according to the video data reception device, and video encoding information regarding the video quality to a video data reception device; and
multiple video encoded data transmission means for multicast or broadcast transmitting video encoded data having different compression ratios.

10. The video data distribution device as defined in claim 2 comprising:
means for managing information on a permitted session of distribution to a video data reception device, and notifying session information that should be notified according to the video data reception device, and video encoding information regarding the video quality to a video data reception device; and
multiple video encoded data transmission means for multicast or broadcast transmitting video encoded data having different kinds regarding intraframe encoding or interframe predictive encoding.

11. The video data distribution device as defined in claim 2 comprising:
means for managing information on a permitted session of distribution to a video data reception device, and notifying session information that should be notified according to the video data reception device, and video encoding information regarding the video quality to the video data reception device; and
multiple video encoded data transmission means for multicast or broadcast transmitting video encoded data having different compression ratios and different kinds regarding intraframe encoding or interframe predictive encoding.

12. A video data reception device comprising:
means for receiving session information notified by a video data distribution device;
means for receiving video encoded data distributed by a video data distribution device based on said session information, and selecting video encoded data from encoded data received normally based on the video quality and/or the compression ratio; and
means for decoding video encoded data selected.

13. A video data reception device comprising:
means for receiving information regarding data confidentiality notified by a video data distribution device;
means for restoring confidential video encoded data received from a video data distribution device based on said information regarding confidentiality, and selecting video encoded data from video encoded data restored normally based on the video quality and/or the compression ratio; and
means for decoding the selected video encoded data.

14. A video data distribution system comprising:
a video data distribution device distributing video data, and a video data reception device receiving video data distributed by said video data distribution device; wherein
said video data distribution device comprises means for selecting a session of distribution according to the compression ratio when it distributes video encoded data of the same video, but having different compression ratios, and for at least one session of distribution transmission is performed by multicast or broadcast.

15. A video data distribution system comprising:
a video data distribution device distributing video data, and a video data reception device receiving video data distributed by said video data distribution device; wherein
said video data distribution device distributes video encoded data of the same video but having different compression ratios to said video data reception device and comprises means for controlling the quality of a video received by a receiver by changing session information notified according to the receiver, and for at least one session of distribution transmission is performed by multicast or broadcast.

16. A video data distribution system comprising:
a video data distribution device distributing video data, and a video data reception device receiving video data distributed by said video data distribution device; wherein
said video data distribution device comprises means for setting information including whether or not confidentiality is required for data distributed, confidentiality method when confidentiality is required, and/or the degree of confidentiality for each session of distribution selected according to the compression ratio when video encoded data of the same video but having different compression ratios are distributed to said video data reception device, and for at least one session of distribution transmission is performed by multicast or broadcast.

17. The video data distribution system as defined in any one of claims 14 to 16 wherein said video encoded data is based on the same encoding method and the same frame configuration.

18. A video data distribution system comprising:
a video data distribution device distributing video data, and a video data reception device receiving video data distributed by said video data distribution device; wherein
said video data distribution device comprises means for selecting a session of distribution according to the kind of video frame and/or video block when it distributes video encoded data to said video data reception device, and at least one session of distribution is transmitted in multicast or broadcast.

19. A video data distribution system comprising:
a video data distribution device distributing video data, and a video data reception device receiving video data distributed by said video data distribution device; wherein
said video data distribution device distributes video encoded data having different video frame and/or video block kinds to said video data reception device, and comprises means for controlling the reception quality of said video data reception device by changing session information notified according to the receiver, and at least one session of distribution is transmitted in multicast or broadcast.

20. A video data distribution system comprising:
a video data distribution device distributing video data, and a video data reception device receiving video data distributed by said video data distribution device; wherein
said video data distribution device comprises means for setting information including whether or not confidentiality is required for data distributed, confidentiality method when confidentiality is required, and/or the degree of confidentiality for each session of distribution selected according to the video frame and/or video block kind when video encoded data is distributed to said video data reception device, and
at least one session of distribution is transmitted in multicast or broadcast.

21. A video data distribution system comprising:
a video data distribution device distributing video data, and a video data reception device receiving video data distributed by said video data distribution device; wherein
said video data distribution device distributes video encoded data having different information in terms of whether or not confidentiality is required for distributed data, confidentiality method when confidentiality is required, and/or the degree of confidentiality to said video data reception device in at least one session of distribution, and comprises means for controlling the quality of a video received by a receiver by changing information regarding confidentiality notified according to said video data reception device, and at least one session of distribution is transmitted in multicast or broadcast.

22. A video data distribution system comprising:
a video data distribution device distributing video data, and a video data reception device receiving video data distributed by said video data distribution device; wherein
said video data reception device comprises means for receiving video encoded data based on session information notified by said video data distribution device, selecting data from encoded data received normally based on the video quality and/or the compression ratio, and decoding it.

23. A video data distribution system comprising:
a video data distribution device distributing video data, and a video data reception device receiving video data distributed by said video data distribution device; wherein
said video data reception device comprises means for restoring confidential data received based on information regarding confidentiality notified by said video data distribution device, selecting data from the video encoded data restored normally based on the video quality and/or the compression ratio, and decoding it.

24. A control method for distributing video data from a video data distribution device to a video data reception device, comprising the steps of:
distribution, by said video data distribution device, video encoded data of the same video but having different compression ratios; and
selecting a session of said distribution according to said compression ratio; wherein
at least one session of distribution is transmitted in multicast or broadcast.

25. A control method for distributing video data from a video data distribution device to a video data reception device, comprising the steps of:
distributing, by said video data distribution device, video encoded data of the same video, but having different compression ratios; and
controlling the quality of a video received by a receiver by changing session information notified according to the receiver; wherein
at least one session of distribution is transmitted in multicast or broadcast.

26. A control method for distributing video data from a video data distribution device to a video data reception device, comprising the steps of:
distributing, by said video data distribution device, video encoded data of the same video, but having different compression ratios; and
setting information including whether or not confidentiality is required for distributed data, confidentiality method when confidentiality is required, and/or the degree of confidentiality for each session of distribution selected according to the compression ratio; wherein
at least one session of distribution is transmitted in multicast or broadcast.

27. The control method for distributing video data as defined in any one of claims 24 to 26 wherein said video encoded data is based on the same encoding method and frame configuration.

28. A control method for distributing video data from a video data distribution device to a video data reception device, comprising the steps of:
distributing, by said video data distribution device; video encoded date; and
selecting a session of said distribution according to the kind of video frame and/or video block; wherein
at least one session of distribution is transmitted in multicast or broadcast.

29. A control method for distributing video data from a video data distribution device to a video data reception device, comprising the steps of:
distributing, by said video data distribution device, video encoded data having different kind of video frame and/or video block; and
controlling the quality of a video received by a receiver by changing session information notified according to the receiver; wherein
at least one session of distribution is transmitted in multicast or broadcast.

30. A control method for distributing video data from a video data distribution device to a video data reception device, comprising the steps of:
distributing, by said video data distribution device, video encoded data; and
setting information including whether or not confidentiality is required for distributed data, confidentiality method when confidentiality is required, and/or the degree of confidentiality for each session of distribution selected according to the video frame and/or video block kind; wherein
at least one session of distribution is transmitted in multicast or broadcast.

31. A control method for distributing video data from a video data distribution device to a video data reception device, comprising the steps of:
distributing, by said video data distribution device, video encoded data having different information in terms of whether or not confidentiality is required for distributed data, confidentiality method when confidentiality is required, and/or the degree of confidentiality in at least one session of distribution; and
controlling the quality of a video received by a receiver by changing information regarding confidentiality notified according to the receiver; wherein
at least one session of distribution is transmitted in multicast or broadcast.

32. A control method for distributing video data from a video data distribution device to a video data reception device, comprising the steps of:
receiving, by said video data reception device, video encoded data based on session information notified by said video data distribution device;
selecting, by said video data reception device, video encoded data from video encoded data received normally based on the video quality and/or the compression ratio; and
decoding video encoded data selected.

33. A control method for distributing video data from a video data distribution device to a video data reception device, comprising the steps of:
restoring, by said video data reception device, received confidential data based on information regarding confidentiality notified by said video data distribution device;
selecting video encoded data from video encoded data restored normally based on the video quality and/or the compression ratio; and
decoding selected video encoded data.

34. A program having a computer constituting a video data distribution device execute the following processing steps: the steps comprising:
selecting a session of distribution according to the compression ratio when video encoded data of the same video, but having different compression ratios are distributed, and
transmitting at least one session of distribution in multicast or broadcast.

35. A program having a computer constituting a video data distribution device execute the following processing steps: the steps comprising:
distributing video encoded data of the same video, but having different compression ratios,
controlling the quality of a video received by a receiver by changing session information notified according to the receiver, and
transmitting at least one session of distribution in multicast or broadcast.

36. A program having a computer constituting a video data distribution device execute the following processing steps: the steps comprising:
setting information including whether or not confidentiality is required for distributed data, confidentiality method when confidentiality is required, and/or the degree of confidentiality for each session of distribution selected according to the compression ratio when video encoded data of the same video, but having different compression ratios are distributed, and
transmitting at least one session of distribution in multicast or broadcast.

37. The program as defined in any one of claims 34 to 36 wherein said video encoded data is based on the same encoding method and frame configuration.

38. A program having a computer constituting a video data distribution device execute the following processing steps: the steps comprising:
selecting a session of distribution according to the kind of video frame and/or video block when video encoded data is distributed, and
transmitting at least one session of distribution in multicast or broadcast.

39. A program having a computer constituting a video data distribution device execute the following processing steps: the steps comprising:
distributing video encoded data having different kind of video frame and/or video block,
controlling the quality of a video received by a receiver by changing session information notified according to the receiver, and
transmitting at least one session of distribution in multicast or broadcast.

40. A program having a computer constituting a video data distribution device execute the following processing steps: the steps comprising:
setting information including whether or not confidentiality is required for distributed data, confidentiality method when confidentiality is required, and/or the degree of confidentiality for each session of distribution selected according to the kind of video frame and/or video block upon distributing video encoded data, and
transmitting at least one session of distribution in multicast or broadcast.

41. A program having a computer constituting a video data distribution device execute the following processing steps: the steps comprising:
distributing video encoded data having different information in terms of whether or not confidentiality is required for distributed data, confidentiality method when confidentiality is required, and/or the degree of confidentiality in at least one session of distribution,
controlling the quality of a video received by a receiver by changing information regarding confidentiality notified according to the receiver, and
transmitting at least one session of distribution in multicast or broadcast.

42. A program having a computer constituting a video data reception device execute the following processing steps: the steps comprising:
receiving video encoded data based on session information notified by a video data distribution device,
selecting data from encoded data received normally based on the video quality and/or the compression ratio, and
decoding it.

43. A program having a computer constituting a video data reception device execute the following processing steps: the steps comprising:
restoring confidential data received based on information regarding data confidentiality notified by a video data distribution device in a video data reception device,
selecting data from video encoded data restored normally based on the video quality and/or the compression ratio, and
decoding it.

44. A video data distribution system comprising:
a video data distribution device, a video data reception device, and a transmission path for transmitting information from said video data distribution device to said video data reception device; wherein
said video data distribution device comprises;
means for distributing multiple video encoded data of the same video, but having different compression ratios in multiple different sessions; and
means for notifying information including information on a session permitted to be distributed and/or a video quality permitted to be received to said video data reception device; provided that at least one session of distribution is transmitted in multicast or broadcast; and
said video data reception device comprises;
means for receiving video encoded data distributed in at least one session based on session information notified by said video data distribution device;
means for selecting data from received video encoded data based on the video quality and/or the compression ratio, and reconstructing it into one piece of video encoded data; and
means for decoding reconstructed video encoded data.

45. A video data distribution system comprising:
a video data distribution device, a video data reception device, and a transmission path for transmitting information from said video data distribution device to said video data reception device; wherein
said video data distribution device comprises;
means for distributing I picture and P picture encoded data of moving picture data or I picture, P picture and B picture encoded data of moving picture data in multiple different sessions; and
means for notifying information including session information on a session permitted to be distributed and/or a video quality permitted to be received to said video data reception device; provided that at least one session of distribution is transmitted in multicast or broadcast; and
said video data reception device comprises;
means for receiving moving picture data distributed in at least one session based on information notified by said video data distribution device;
means for reconstructing received moving picture data into one piece of moving picture data based on information notified by said video data distribution device; and
means for decoding reconstructed moving picture data.

46. A video data distribution system comprising:
a video data distribution device, a video data reception device, and a transmission path for transmitting information from said video data distribution device to said video data reception device; wherein
said video data distribution device comprises;
means for distributing moving picture data and intra macroblock (Intra-MB) encoded data of at least a part of frames of moving picture data in different sessions; and
means for notifying information including session information on a session permitted to be distributed and/or a video quality permitted to be received, to said video data reception device;
provided that at least one session of distribution is transmitted in multicast or broadcast; and
said video data reception device comprises;
means for receiving data distributed in at least one session based on session information notified by said video data distribution device;
means for selecting data from received moving picture data based on the video quality and/or the compression ratio, and reconstructing it into one piece of moving picture data; and
means for decoding reconstructed moving picture data.

47. A video data distribution system comprising:
a video data distribution device, a video data reception device, and a transmission path for transmitting information from said video data distribution device to said video data reception device; wherein
said video data distribution device comprises;
means for distributing I picture and P picture encoded data or I picture, P picture and B picture encoded data of moving picture data and intra macroblock (Intra-MB) encoded data of at least a part of frames of moving picture in multiple different sessions; and
means for notifying information including session information permitted to be distributed and/or a video quality permitted to be received, to said video data reception device;
provided that at least one session of distribution is transmitted in multicast or broadcast; and
said video data reception device comprises;
means for receiving data distributed in at least one session based on information notified by said video data distribution device;
means for selecting data from received moving picture data based on the video quality and/or the compression ratio, and reconstructing it into one piece of moving picture data; and
means for decoding reconstructed moving picture data.

48. A video data distribution system comprising:
a video data distribution device, a video data reception device, and a transmission path for transmitting information from said video data distribution device to said video data reception device; wherein
said video data distribution device comprises;
means for distributing I picture and P picture encoded data, or I picture, P picture and B picture encoded data of multiple moving picture data of the same video, but having different compression ratios in multiple different sessions; and
means for notifying information including session information permitted to be distributed and/or a video quality permitted to be received, to said video data reception device;
provided that at least one session of distribution is transmitted in multicast or broadcast; and
said video data reception device comprises;
means for receiving data distributed in at least one session based on information notified by said video data distribution device;
means for selecting data from received moving picture data based on the video quality and/or the compression ratio, and reconstructing it into one piece of moving picture data; and
means for reconstructed decoding moving picture data.

49. A video data distribution system comprising:
a video data distribution device, a video data reception device, and a transmission path for transmitting information from said video data distribution device to said video data reception device; wherein
said video data distribution device comprises;
means for distributing encoded data of I picture and P picture or I picture, P picture and B picture of each of multiple moving picture data of the same video, but having different compression ratios, and intra macroblock (Intra-MB) encoded data of at least a part of frames of moving picture in multiple different sessions; and
means for notifying information including session information permitted to be distributed and/or a video quality permitted to be received to said video data reception device;
provided that at least one session of distribution is transmitted in multicast or broadcast; and
said video data reception device comprises;
means for receiving data distributed in at least one session based on information notified by said video data distribution device;
means for selecting data from received moving picture data based on the video quality and/or the compression ratio, and reconstructing it into one piece of moving picture data; and
means for decoding reconstructed moving picture data.

50. The video data distribution system as defined in any one of claims 44 to 49 wherein said video data distribution device comprises:
means for setting information including whether or not confidentiality is required for data distributed, confidentiality method when confidentiality is required, and/or the degree of confidentiality for each session of distribution; and
means for notifying setting information regarding confidentiality to said video data reception device; and
said video data reception device comprises;
means for receiving setting information regarding confidentiality notified by said video data distribution device; and
means for restoring received confidential moving picture data based on said information.

51. A control method for distributing video data from a video data distribution device to a video data reception device via a transmission path, comprising the steps of:
distributing, by said video data distribution device, moving picture data of the same video, but having different compression ratios in multiple different sessions;
notifying, by said video data distribution device, information including session information permitted to be distributed and/or a video quality permitted to be received, to said video data reception device;
receiving, by said video data reception device, video encoded data distributed in at least one session based on information notified by said video data distribution device;
selecting, by said video data reception device, data from received video data based on the video quality and/or the compression ratio, and reconstructing it into one piece of video data; and
decoding, by said video data reception device, reconstructed video data provided that at least one session of distribution is transmitted in multicast or broadcast.

52. A control method for distributing video data from a video data distribution device to a video data reception device via a transmission path, comprising the steps of:
distributing, by said video data distribution device, I picture and P picture encoded data of moving picture data or I picture, P picture and B picture encoded data of moving picture data in multiple different sessions;
notifying, by said video data distribution device, information including session information permitted to be distributed and/or a video quality permitted to be received, to said video data reception device;
receiving, by said video data reception device, data distributed in at least one session based on information notified by said video data distribution device;
reconstructing, by said video data reception device, received moving picture data into one piece of moving picture data; and
decoding, by said video data reception device, reconstructed moving picture data;
provided that at least one session of distribution is transmitted in multicast or broadcast.

53. A control method for distributing video data from a video data distribution device to a video data reception device via a transmission path, comprising the steps of:
distributing, by said video data distribution device, moving picture data, and intra macroblock (Intra-MB) encoded data of at least a part of frames of moving picture data in multiple different sessions;
notifying, by said video data distribution device, information including session information permitted to be distributed and/or a video quality permitted to be received to said video data reception device;
receiving, by said video data reception device, data distributed in at least one session based on information notified by said video data distribution device;
selecting, by said video data reception device, data from received moving picture data based on the video quality and/or the compression ratio, and reconstructing it into one piece of moving picture data; and
decoding, by said video data reception device, reconstructed moving picture data;
provided that at least one session of distribution is transmitted in multicast or broadcast.

54. A control method for distributing video data from a video data distribution device to a video data reception device via a transmission path, comprising the steps of:
distributing, by said video data distribution device, I picture and P picture encoded data or I picture, P picture and B picture encoded data of moving picture data, and intra macroblock (Intra-MB) encoded data of at least a part of frames of moving picture in multiple different sessions;
notifying, by said video data distribution device, information including session information permitted to be distributed and/or a video quality permitted to be received to said video data reception device;
receiving, by said video data reception device, data distributed in at least one session based on session information notified;
selecting, by said video data reception device, data from received moving picture data based on the video quality and/or the compression ratio, and reconstructing it into one piece of moving picture data; and
decoding, by said video data reception device, reconstructed moving picture data;
provided that at least one session of distribution is transmitted in multicast or broadcast.

55. A control method for distributing video data from a video data distribution device to a video data reception device via a transmission path, comprising the steps of:
distributing, by said video data distribution device, I picture and P picture encoded data, or I picture, P picture and B picture encoded data of multiple moving picture data of the same video, but having different compression ratios in multiple different sessions;
notifying, by said video data distribution device, information including session information permitted to be distributed and/or a video quality permitted to be received, to said video data reception device;
receiving, by said video data reception device, data distributed in at least one session based on information notified by said video data distribution device;
selecting, by said video data reception device, data from received moving picture data based on the video quality and/or the compression ratio, and reconstructing it into one piece of moving picture data; and
decoding, by said video data reception device, reconstructed moving picture data;
provided that at least one session of distribution is transmitted in multicast or broadcast

56. A control method for distributing video data from a video data distribution device to a video data reception device via a transmission path, comprising the steps of:
distributing, by said video data distribution device, I picture and P picture encoded data or I picture, P picture and B picture encoded data of each of multiple moving picture data of the same video, but having different compression ratios, and intra macroblock (Intra-MB) encoded data of at least a part of frames of the moving picture in multiple different sessions;
notifying, by said video data distribution device, information including session information permitted to be distributed and/or a video quality permitted to be received, to said video data reception device;
receiving, by said video data reception device, data distributed in at least one session based on session information notified by said video data distribution device;
selecting, by said video data reception device, data from received moving picture data based on the video quality and/or the compression ratio, and reconstructing it into one piece of moving picture data; and
decoding, by said video data reception device, reconstructed moving picture data;
provided that at least one session of distribution is transmitted in multicast or broadcast.

57. The control method for distributing video data as defined in any one of claims 51 to 56, comprising the steps of:
setting, by said video data distribution device, information including whether or not confidentiality is required for distributed data, confidentiality method when confidentiality is required, and/or the degree of confidentiality for each session of distribution;
notifying, by said video data distribution device, setting information regarding confidentiality to said video data reception device; and
receiving, by said video data reception device, setting information regarding confidentiality notified by said video data distribution device, and restoring confidential moving picture data received based on said information.

58. A video data distribution device comprising:
means for distributing video encoded data of the same video, but having different compression ratios; and
means for selecting a session of distribution according to the compression ratio; wherein
at least one session of distribution is transmitted in multicast or broadcast.

59. A video data distribution device comprising:
means for distributing video encoded data of the same video, but having different compression ratios; and
means for controlling the quality of a video to be received by a receiver by changing session information to be notified according to the receiver; wherein
at least one session of distribution is transmitted in multicast or broadcast.

60. A video data distribution device comprising:
means for distributing video encoded data of the same video, but having different compression ratios; and
means for setting information including whether or not confidentiality of video encoded data is required, confidentiality method when confidentiality is required, and/or the degree of confidentiality, for each session of distribution selected according to the compression ratio; wherein
at least one session of distribution is transmitted in multicast or broadcast.

61. The video data distribution device as defined in any one of claims 58 to 60 wherein said video encoded data are based on the same encoding method and frame configuration.

62. A video data distribution device comprising:
means for distributing video encoded data; and
means for selecting a session of distribution according to the kind of video frame and/or video block; wherein
at least one session of distribution is transmitted in multicast or broadcast.

63. A video data distribution device comprising:
means for distributing video encoded data having different kind of video frame and/or video block; and
means for controlling the quality of a video received by a receiver by changing session information to be notified according to the receiver; wherein
at least one session of distribution is transmitted in multicast or broadcast.

64. A video data distribution device comprising:
means for distributing video encoded data; and
means for setting information including whether or not confidentiality is required for distributed data, confidentiality method when confidentiality is required, and/or the degree of confidentiality, for each session of distribution selected according to the kind of video frame and/or video block; wherein
at least one session of distribution is transmitted in multicast or broadcast.

65. A video data distribution device comprising:
means for distributing video encoded data having different information including whether or not confidentiality is required for distributed data, confidentiality method when confidentiality is required, and/or the degree of confidentiality in at least one session of disribution; and
means for controlling the quality of a video received by a receiver by changing information regarding confidentiality to be notified according to the receiver; wherein
at least one session of distribution is transmitted in multicast or broadcast.

66. The video data distribution device as defined in claim 58, comprising:
means for managing information on a session permitted to be distributed to a video data reception device, and notifying session information that should be notified and/or video encoding information regarding the video quality to a video data reception device according to the video data reception device; and
multiple video encoded data transmission means for transmitting video encoded data having different compression ratios.

67. The video data distribution device as defined in claim 59, comprising:
means for managing information on a session permitted to be distributed to a video data reception device, and notifying session information that should be notified and/or video encoding information regarding the video quality to a video data reception device according to the video data reception device; and
multiple video encoded data transmission means for transmitting video encoded data having different kinds regarding intraframe encoding or interframe predictive encoding.

68. The video data distribution device as defined in claim 59, comprising:
means for managing information on a session permitted to be distributed to a video data reception device, and notifying session information that should be notified and/or video encoding information regarding the video quality to a video data reception device according to the video data reception device; and
multiple video encoded data transmission means for transmitting moving picture encoded data having different compression ratios and different kinds regarding intraframe encoding or interframe predictive encoding.

69. A video data distribution device comprising means for distributing video encoded data in multiple sessions wherein at least one session of distribution is transmitted in multicast or broadcast.

70. A video data distribution device comprising:
means for distributing video encoded data in multiple sessions; and
means for controlling the quality of a video received by a receiver by changing session information to be notified according to the receiver; wherein
at least one session of distribution is transmitted in multicast or broadcast.

71. A video data distribution device comprising:
means for distributing video encoded data in multiple sessions; and
means for setting information including whether or not confidentiality of video encoded data is required, confidentiality method when confidentiality is required, and/or the degree of confidentiality for each session of distribution selected according to the compression ratio; wherein
at least one session of distribution is transmitted in multicast or broadcast.

72. The video data distribution device as defined in any one of claims 1 to 4, 58 to 61, or 69 to 71 wherein the transmission unit of said video encoded data is transmitted in a transmission unit of data obtained by encoding the same part of the same frame.

73. A video data distribution device comprising:
means for distributing video encoded data in multiple sessions; and
means for controlling the quality of a video received by a receiver by changing session information to be notified according to the receiver.

74. The video data distribution device as defined in any one of claims 9, 11, 66, or 68 to 72 wherein said video encoded data are distributed with a time lag.

75. The video data distribution device as defined in any one of claims 1, 3 to 5, 7 to 9, 58, 69, 72, or 74, further comprising at least one means for multiplexing and transmitting at least two of said session of distributions which are distributed in at least one session.

76. The video data reception device as defined in claims 12 or 13, further comprising means for selecting whether or not at least one piece of video encoded data should be received based on at least one of the following: the error/loss rate of received data, available power, and predetermined settings.

77. A video data distribution system comprising:
a video data distribution device distributing video data, and a video data reception device receiving video data distributed by said video data distribution device; wherein
said video data distribution device comprises means for distributing video encoded data in multiple sessions and at least one session of distribution is transmitted in multicast or broadcast.

78. A video data distribution system comprising:
a video data distribution device distributing video data, and a video data reception device receiving video data distributed by said video data distribution device; wherein
said video data distribution device comprises:
means for distributing video encoded data to said video data reception device in multiple sessions; and
means for controlling the quality of a video received by a receiver by changing session information to be notified according to the receiver;
provide that at least one session of distribution is transmitted in multicast or broadcast.

79. A video data distribution system comprising:
a video data distribution device distributing video data, and a video data reception device receiving video data distributed by said video data distribution device; wherein
said video data distribution device comprises:
means for setting information including whether or not confidentiality is required for data distributed, confidentiality method when confidentiality is required, and/or the degree of confidentiality for each session of distribution selected according to the compression ratio when video encoded data is distributed to said video data reception device in multiple sessions;
provided that at least one session of distribution is transmitted in multicast or broadcast.

80. The video data distribution system as defined in any one of claims 14 to 17, or 77 to 79 wherein said video encoded data is transmitted in a transmission unit of data obtained by encoding the same part of the same frame.

81. The video data distribution system as defined in any one of claims 14 to 17, or 77 to 79 wherein said video encoded data are distributed with a time lag.

82. The video data distribution system as defined in any one of claims 14, 16 to 18, 20, 21, 77, or 81, further comprising at least one means for multiplexing and transmitting at least two of said session of distributions so as to be distributed in at least one session.

83. The video data distribution system as defined in claims 22 or 23, wherein said video data reception device further comprises means for selecting whether or not at least one piece of video encoded data should be received based on at least one of the following: the error/loss rate of received data, available power, and predetermined settings.

84. A control method for distributing video data from a video data distribution device to a video data reception device, comprising the steps of:
distributing, by said video data distribution device, video encoded data in multiple sessions; wherein
at least one session of distribution is transmitted in multicast or broadcast.

85. A control method for distributing video data from a video data distribution device to a video data reception device, comprising the steps of:
distributing, by said video data distribution device, video encoded data in multiple sessions; and
controlling the quality of a video received by a receiver by changing session information notified according to the receiver; wherein
at least one session of distribution is transmitted in multicast or broadcast.

86. A control method for distributing video data from a video data distribution device to a video data reception device, comprising the steps of:
distributing, by said video data distribution device, video encoded data in multiple sessions; and
setting information including whether or not confidentiality is required for distributed data, confidentiality method when confidentiality is required, and/or the degree of confidentiality for each session of distribution selected according to the compression ratio; wherein
at least one session of distribution is transmitted in multicast or broadcast.

87. The control method for distributing video data as defined in any one of claims 24 to 27, or 84 to 86 wherein said video encoded data is transmitted in a transmission unit of data obtained by encoding the same part of the same frame.

88. The control method for distributing video data as defined in any one of claims 24 to 27, or 84 to 87 wherein said video encoded data are distributed with a time lag.

89. The control method for distributing video data as defined in any one of claims 24, 26 to 28, 30, 31, 84, or 88, comprising a step of multiplexing and transmitting at least two of said session of distributions so as to be distributed in at least one session.

90. The control method for distributing video data as defined in claims 32 or 33 wherein said video data reception device further comprises means for selecting whether or not at least one piece of video encoded data should be received based on at least one of the following: the error/loss rate of received data, available power, and predetermined settings.

91. A program having a computer constituting a video data distribution device execute the following processings: the processing comprising:
distributing video encoded data in multiple sessions, and
transmitting at least one session of distribution in multicast or broadcast.

92. A program having a computer constituting a video data distribution device execute the following processings; the processing comprising:
distributing video encoded data in multiple sessions,
controlling the quality of a video received by a receiver by changing session information notified according to the receiver, and
transmitting at least one session of distribution in multicast or broadcast.

93. A program having a computer constituting a video data distribution device execute the following processings; the processings comprising the steps of:
distributing video encoded data in multiple sessions,
setting information including whether or not confidentiality is required for distributed data, confidentiality method when confidentiality is required, and/or the degree of confidentiality for each session of distribution, and
transmitting at least one session of distribution in multicast or broadcast.

94. The program as defined in any one of claims 34 to 37, or 91 to 93 wherein said video encoded data is transmitted in a transmission unit of data obtained by encoding the same part of the same frame.

95. The program as defined in any one of claims 34 to 37, or 91 to' 93, wherein said processing comprises:
distributing said video encoded data with a time lag.

96. The program as defined in any one of claims 35 to 38, 40, 41, 91, or 95, wherein said processings comprise:
multiplexing and transmitting at least two of said session of distributions, and
distributing them in at least one session.

97. The program as defined in claim 42 or 43, wherein said processings comprise:
selecting whether or not at least one piece of video encoded data should be received based on at least one of the following: the error/loss rate of received data, available power, and predetermined settings.

98. A video data distribution system comprising:
a video data distribution device, a video data reception device, and a transmission path for transmitting information from said video data distribution device to said video data reception device; wherein
said video data distribution device comprises;
means for distributing video encoded data in multiple different sessions; and
means for notifying information including session information permitted to be distributed and/or a video quality permitted to be received, to said video data reception device;
provided that at least one session of distribution is transmitted in multicast or broadcast; and
said video data reception device comprises;
means for receiving video data distributed in at least one session based on information notified by said video data distribution device;
means for selecting data from received video encoded data based on the video quality and/or the compression ratio, and reconstructing it into one piece of video encoded data; and
means for decoding reconstructed video encoded data.

99. The video data distribution system as defined in any one of claims 48 to 50, or 98 wherein said video encoded data are distributed with a time lag.

100. The video data distribution system as defined in any one of claims 44 to 50, 98, or 99, further comprising at least one means for multiplexing and transmitting at least two of said session of distributions, so as to be distributed in at least one session.

101. A control method for distributing video data from a video data distribution device to a video data reception device via a transmission path, comprising the steps of:
distributing, by said video data distribution device, moving picture data in multiple different sessions;
notifying, by said video data distribution device, information including session information permitted to be distributed and/or a video quality permitted to be received to said video data reception device;
receiving, by said video data reception device, video encoded data distributed in at least one session based on information notified by said video data distribution device;
selecting, by said video data reception device, data from received video data based on the video quality and/or the compression ratio, and reconstructing it into one piece of video data; and
decoding, by said video data reception device, reconstructed video data; wherein
at least one session of distribution is transmitted in multicast or broadcast.

102. The control method for distributing video data as defined in any one of claims 51, 55 to 57, or 101 wherein said video encoded data are distributed with a time lag.

103. The control method for distributing video data as defined in any one of claims 51 to 57, 101, or 102, comprising the step of multiplexing at least two of said session of distributions, so as to be distributed in at least one session.

104. The control method for distributing video data as defined in any one of claims 51 to 57, or 101 to 103, wherein said video data reception device further comprises:
means for selecting whether or not at least one piece of video encoded data should be received based on at least one of the following:
the error/loss rate of received data, available power, and predetermined settings.

105. The video data distribution system as defined in any one of claims 46, 47, or 49 wherein said video data reception device selects encoded data encoded as an intra macroblock in a prescribed method using said means for selecting and reconstructing the data.

106. The video data distribution system as defined in any one of claims 53, 54, or 56 wherein said video data reception device selects encoded data encoded as an intra macroblock in a prescribed method using said means for selecting and reconstructing the data.

107. A video data distribution system comprising:
a video data distribution device distributing video data, and multiple video data reception devices receiving video data distributed by said video data distribution device; wherein
said video data distribution device comprises;
multiple transmission means for transmitting video encoded data to a transmission path; and
means for notifying session information according to said video data reception device, to which data is distributed, to said video data reception devices via a transmission path; wherein
the qualities of video data received by one and another one of said video data reception devices are variably controlled by having said video date distributing device:
(i) distribute video encoded data of the same video to one of said video data reception devices, using at least two of said multiple transmission means, and
(ii) transmit video encoded data to another one of said video data reception devices using one of said transmission means or a number of said transmission means fewer than the number of said transmission means used to transmit video encoded data to the first one of said video data reception devices.

108. A video data distribution system comprising:
a video data distribution device distributing video data, and multiple video data reception devices receiving video data distributed by said video data distribution device; wherein
said video data distribution device comprises;
multiple transmission means for transmitting video encoded data to a transmission path; and
means for notifying session information according to said video data reception device, to which data is distributed, to said video data reception devices via a transmission path; wherein
the qualities of video data received by one and another one of said video data reception devices are variably controlled by having said video data distribution device:
(i) distribute video encoded data to one of said video data reception devices using at least one of said multiple transmission means in unicast, and
(ii) transmit video encoded data having the same video as, but different compression ratios from that of video encoded data distributed using one of said transmission means to one of said video data reception devices and at least another one of said video data reception devices using at least another one of said transmission means in multicast or broadcast.

109. A video data distribution system comprising:
a video data distribution device distributing video data, and multiple video data reception devices receiving video data distributed by said video data distribution device; wherein
said video data distribution device comprises;
multiple transmission means for transmitting video encoded data to a transmission path; and
means for notifying restoration information for restoring video encoded data distributed confidentially to said video data reception devices via a transmission path according to said video data reception device, to which data is distributed; wherein
the qualities of video data received by one and another one of said video data reception devices are variably controlled by having said video data distribution device:
(i) distribute confidential video encoded data of the same video to one and another one of said video data reception devices using at least one of said transmission means, and notify restoration information for restoring said confidential video encoded data of the same video to said one of said video data reception devices;
(ii) on the other hand, to another one of said video data reception devices,
(a) not notify restoration information for restoring said confidential video encoded data of the same video, or
(b) notify restoration information on video encoded data of the same video having a relatively high compression ratio, or
(c) notify restoration information on a fewer number of video encoded data than multiple video encoded data of the same video distributed to said one of said video data reception devices.

110. The video data distribution system as defined in any one of claims 107 to 109 wherein said video data distribution device comprises at least one multiplex transmission means for multiplexing and transmitting outputs of multiple said transmission means into one session and said video data reception device comprises at least one separation means for demultiplexing video encoded data from received signal multiplexed into one session.
